# EUROPEAN PATENT APPLICATION

(11) **EP 4 750 185 A1**
(43) Date of publication of application: **27.05.2026**
(21) Application number: 23946104.9
(22) Date of filing: 21.07.2023
(51) Int. Cl.: H04W 72/04

(54) **TRANSMISSION CONTROL METHOD, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: LI, Yapu, Dongguan, Guangdong 523860 (CN); LUO, Chaoming, Dongguan, Guangdong 523860 (CN); GAO, Ning, Dongguan, Guangdong 523860 (CN)
(74) Representative: Grassi, Stefano
(86) International application number: PCT/CN2023/108753
(87) International publication number: WO 2025/020010

(57) **Abstract**

Provided in the embodiments of the present application are a transmission control method, and a device and a storage medium. The method comprises: a first access point device receiving a first frame, which is sent by a second access point device, wherein the first frame is used for indicating a target transmission parameter, the target transmission parameter is used for each access point among at least one access point device that participates in cooperative transmission to schedule the transmission of at least one target frame, the at least one access point device comprises a first non-access point device, and the target frame is located behind a first frame that is transmitted between the first access point device and the first non-access point device.

## Description

### TECHNICAL FIELD

Embodiments of the disclosure relate to the field of mobile communication technologies, and particularly, to a method and a device for transmission control, and a storage medium.

### BACKGROUND

At present, the Wireless Local Area Network (WLAN) industry is one of the fastest developing industries in the entire data communication field. As a supplement and extension of traditional wired local area networks, WLAN solutions have gained popularity among home network users, small and medium-sized office users, enterprise users and telecom operators due to their advantages such as flexibility, mobility, expandability and lower investment cost, and thus have been quickly applied.

An Access Point (AP) candidate set is a set of APs that can initiate or participate in the multi-AP coordination. An AP that obtains a Transmission Opportunity (TXOP) and initiates the multi-AP coordination is referred to as a sharing AP. The AP in the AP candidate set may participate as a shared AP in the multi-AP coordination initiated by the sharing AP in the same AP candidate set. At least one AP in the AP candidate set can become a sharing AP. How to control transmission between the AP participating in multi-AP coordinated transmission and station (STA) is an urgent problem to be solved.

### SUMMARY

Embodiments of the disclosure provide a method and a device for transmission control, and a storage medium.

A method for transmission control according to an embodiment of the disclosure includes a following operation.

A first access point device receives a first frame transmitted by a second access point device, where the first frame is used to indicate a target transmission parameter, the target transmission parameter is used for each of at least one access point device participating in a coordinated transmission to schedule transmission of at least one target frame, the at least one access point device includes a first non-access point device, the target frame is located after a first one frame transmitted between the first access point device and the first non-access point device.

A method for transmission control according to an embodiment of the disclosure includes a following operation.

A second access point device transmits a first frame to a first access point device, where the first frame is used to indicate a target transmission parameter, the target transmission parameter is used for each of at least one access point device participating in a coordinated transmission to schedule transmission of at least one target frame, the at least one access point device includes a first non-access point device, the target frame is located after a first one frame transmitted between the first access point device and the first non-access point device.

A first access point device provided according to an embodiment of the disclosure includes a first communication unit.

The first communication unit is configured to receive a first frame transmitted by a second access point device, where the first frame is used to indicate a target transmission parameter, the target transmission parameter is used for each of at least one access point device participating in a coordinated transmission to schedule transmission of at least one target frame, the at least one access point device includes a first non-access point device, the target frame is located after a first one frame transmitted between the first access point device and the first non-access point device.

A second access point device provided according to an embodiment of the disclosure includes a second communication unit.

The second communication unit is configured to transmit a first frame to a first access point device, where the first frame is used to indicate a target transmission parameter, the target transmission parameter is used for each of at least one access point device participating in a coordinated transmission to schedule transmission of at least one target frame, the at least one access point device includes a first non-access point device, the target frame is located after a first one frame transmitted between the first access point device and the first non-access point device.

A communication device provided in an embodiment of the disclosure may be a first access point device or a second access point device in the above schemes, and the communication device includes a processor and a memory. The memory is configured to store a computer program, and the processor is configured to call the computer program stored in the memory and run the computer program, to cause the communication device to perform the above-described method for transmission control.

A chip provided according to an embodiment of the disclosure is configured to perform the above method for transmission control.

Specifically, the chip includes a processor for calling a computer program from a memory and running the computer program to cause a device on which the chip is installed to perform the above-described method for transmission control.

A computer-readable storage medium provided in an embodiment of the disclosure is configured to store a computer program, execution of which causes a computer to perform the above-described method for transmission control.

A computer program product provided in an embodiment of the disclosure includes computer program instructions, execution of which cause a computer to perform the above-described method for transmission control.

A computer program provided in an embodiment of the disclosure, when running on a computer, causes the computer to perform the above-described method for transmission control.

According to the above technical solutions, a first access point device receives a first frame transmitted by a second access point device, where the first frame is used to indicate a target transmission parameter, the target transmission parameter is used for each of at least one access point device participating in a coordinated transmission to schedule transmission of at least one target frame, the at least one access point device includes a first non-access point device, the target frame is located after a first one frame transmitted between the first access point device and the first non-access point device. In this way, transmission of non-initial frames between the first access point device and the first non-access point device is configured through the first frame, thereby controlling transmission between multiple APs participating in the multi-AP coordinated transmission and the station (STA).

### BRIEF DESCRIPTION OF THE DRAWINGS

The accompanying drawings, which are illustrated herein, provide a further understanding of the disclosure and constitute a part of this disclosure. The exemplary embodiments of the disclosure and their description are used to explain the disclosure and not to unduly limit the disclosure. In the drawings:
FIG. 1 is an optional diagram of an application scenario according to an embodiment of the disclosure.
FIG. 2A is an optional diagram of an application scenario according to an embodiment of the disclosure.
FIG. 2B is an optional diagram of an application scenario according to an embodiment of the disclosure.
FIG. 3 is an optional diagram of a multi-AP coordinated transmission scenario provided in an embodiment of the disclosure.
FIG. 4 is an optional diagram of Coordinated Orthogonal Frequency Division Multiple Access (C-OFDMA) provided in an embodiment of the disclosure.
FIG. 5 is an optional diagram of a coordinated Uplink Multi-User Multiple-Input Multiple-Output (UL MU-MIMO) provided in an embodiment of the disclosure.
FIG. 6 is an optional diagram of coordinated beamforming/null steering provided in an embodiment of the disclosure.
FIG. 7 is an optional diagram of cooperative spatial multiplexing provided in an embodiment of the disclosure.
FIG. 8 is an optional diagram of joint transmission provided in an embodiment of the disclosure.
FIG. 9 is an optional diagram of a multi-AP coordinated transmission scenario provided in an embodiment of the disclosure.
FIG. 10 is an optional diagram of an uplink acknowledgement manner provided in an embodiment of the disclosure.
FIG. 11 is an optional diagram of an uplink acknowledgement manner provided in an embodiment of the disclosure.
FIG. 12 is an optional diagram of a downlink acknowledgement manner provided in an embodiment of the disclosure.
FIG. 13 is an optional diagram of a downlink acknowledgement manner provided in an embodiment of the disclosure.
FIG. 14 is an optional diagram of a downlink acknowledgement manner provided in an embodiment of the disclosure.
FIG. 15 is a diagram of an optional frame format of a trigger frame provided in an embodiment of the disclosure.
FIG. 16 is a diagram of an optional frame format of a common information field of a trigger frame provided in an embodiment of the disclosure.
FIG. 17 is a diagram of an optional frame format of a special user information field of a trigger frame provided in an embodiment of the disclosure.
FIG. 18 is a diagram of an optional frame format of an Extremely High Throughput (EHT) variable user information field of a trigger frame provided in an embodiment of the disclosure.
FIG. 19 is an optional diagram of multi-coordinated transmission provided in an embodiment of the disclosure.
FIG. 20 is an optional diagram of multi-coordinated transmission provided in an embodiment of the disclosure.
FIG. 21 is an optional diagram of multi-coordinated transmission provided in an embodiment of the disclosure.
FIG. 22 is an optional flowchart of a method for transmission control provided in an embodiment of the disclosure.
FIG. 23 is an optional flowchart of a method for transmission control provided in an embodiment of the disclosure.
FIG. 24 is a diagram of an optional format of an Ultra High Reliability Multi-User Physical Layer Protocol Data Unit (UHR MU PPDU) provided in an embodiment of the disclosure.
FIG. 25 is a diagram of an optional format of a UHR TB PPDU provided in an embodiment of the disclosure.
FIG. 26 is an optional diagram of multi-coordinated transmission provided in an embodiment of the disclosure.
FIG. 27 is a diagram of an optional format of UL acknowledgement information provided in an embodiment of the disclosure.
FIG. 28 is a diagram of an optional format of UL acknowledgement information provided in an embodiment of the disclosure.
FIG. 29 is an optional diagram of multi-coordinated transmission provided in an embodiment of the disclosure.
FIG. 30 is a diagram of an optional format of UL acknowledgement information provided in an embodiment of the disclosure.
FIG. 31 is a diagram of an optional format of UL acknowledgement information provided in an embodiment of the disclosure.
FIG. 32 is a diagram of an optional format of UL acknowledgement information provided in an embodiment of the disclosure.
FIG. 33 is a diagram of an optional format of UL acknowledgement information provided in an embodiment of the disclosure.
FIG. 34 is an optional diagram of multi-coordinated transmission provided in an embodiment of the disclosure.
FIG. 35 is a diagram of an optional format of UL acknowledgement RU allocation information provided in an embodiment of the disclosure.
FIG. 36 is an optional diagram of multi-coordinated transmission provided in an embodiment of the disclosure.
FIG. 37 is a diagram of an optional format of UL acknowledgement RU allocation information provided in an embodiment of the disclosure.
FIG. 38 is an optional diagram of multi-coordinated transmission provided in an embodiment of the disclosure.
FIG. 39 is an optional diagram of multi-coordinated transmission provided in an embodiment of the disclosure.
FIG. 40 is a diagram of an optional format of UL acknowledgement RU allocation information provided in an embodiment of the disclosure.
FIG. 41A is a diagram of an optional format of Uplink Trigger-Based PPDU (UL TB PPDU) information provided in an embodiment of the disclosure.
FIG. 41B is a diagram of an optional format of acknowledgement RU allocation information provided in an embodiment of the disclosure.
FIG. 42 is a diagram of an optional structure of a first access point device provided in an embodiment of the disclosure.
FIG. 43 is a diagram of an optional structure of a second access point device provided in an embodiment of the disclosure.
FIG. 44 is a diagram of a structure of a communication device provided in an embodiment of the disclosure.
FIG. 45 is a diagram of a structure of a chip provided in an embodiment of the disclosure.
FIG. 46 is a block diagram of a communication system provided in an embodiment of the disclosure.

### DETAILED DESCRIPTION

The technical solutions in the embodiments of the disclosure would be described below in conjunction with the accompanying drawings in the embodiments of the disclosure. It is apparent that the described embodiments are a part of the embodiments of the disclosure, rather than all of the embodiments. Based on the embodiments of the disclosure, all other embodiments obtained by those of ordinary skill in the art without creative effort fall within the scope of protection of the disclosure.

The technical solutions of the embodiments of the disclosure may be applied to various communication systems, such as WLAN, a Wi-Fi, or other communication systems. The frequency bands supportable by the WLAN technologies may include, but are not limited to, low frequency bands (e.g., 2.4GHz, 5GHz, 6GHz), high frequency bands (e.g., 45GHz, 60GHz).

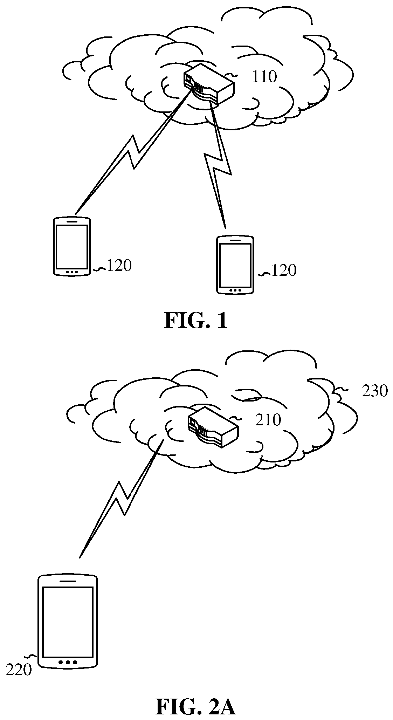

FIG. 1 is an example of architecture of a communication system to which an embodiment of the disclosure applies.

As illustrated in FIG. 1, the communication system 100 may include an AP 110, and STAs 120 accessing a network through the AP 110. In some scenarios, the AP 110 may be referred to as an AP STA, i.e., the AP 110 is also a type of STA in a sense. In some scenarios, the STA 120 may be referred to as a Non-AP STA. In some scenarios, the STA 120 may include an AP STA and a Non-AP STA. Communications in the communication system 100 may include: a communication between the AP 110 and the STA 120, or a communication between the STA 120 and the STA 120, or a communication between the STA 120 and a peer STA, where the peer STA may refer to a peer device communicating with the STA 120. For example, the peer STA may be an AP or a Non-AP STA.

The AP 110 may be used as a bridge connecting a wired network and a wireless network, and its main function is to connect various wireless network clients together, and then connect the wireless network to Ethernet. The AP 110 may be a terminal device (e.g., a mobile phone) or network device (e.g., router) with a WiFi chip.

It should be noted that the role of the STA 120 in the communication system is not absolute. That is to say, the role of the STA 120 in the communication system may be switched between the AP and the STA. For example, in some scenarios, when the mobile phone is connected to the route, the mobile phone is an STA; and when the mobile phone is a hotspot for other mobile phones, the mobile phone acts as an AP.

In some embodiments, the AP 110 and the STA 120 may be devices applied in the Vehicle to Everything (V2X), Internet of Things (IoT) nodes, sensors and the like in the IoT, smart cameras, smart remote controllers, smart water meters, smart electric meters and the like in a smart home, and sensors and the like in a smart city.

In some embodiments, the AP 110 may be a device supporting the 802.11be standard. The AP may be a device supporting various current and future 802.11 family WLAN standards such as 802.11ax, 802.11ac, 802.11n, 802.11g, 802.11b, and 802.11a. In some embodiments, the STA 120 may support the 802.11be format. The STA may also support various current and future 802.11 family WLAN standards such as 802.11ax, 802.11ac, 802.11n, 802.11g, 802.11b and 802.11a.

In some embodiments, the AP 110 and/or the STA 120 may be arranged on land including indoor or outdoor areas, handheld, wearable, or on-board; or may be arranged on the water (such as on a ship); or may be arranged in the air (such as on an airplane, a balloon, or a satellite).

In some embodiments, the STA 120 may be a device supporting WLAN/WiFi technologies, such as a mobile phone, a tablet computer (or Pad), a computer with wireless transceiver function, a Virtual Reality (VR) device, an Augmented Reality (AR) device, a wireless device in industrial control, a set-top box, a wireless device in self-driving, an on-board communication device, a wireless device in remote medical, a wireless device in a smart grid, a wireless device in transportation security, a wireless device in a smart city, a wireless device in a smart home, an on-board communication device, or a wireless communication chip/Application Specific Integrated Circuit (ASIC)/System on Chip (SoC).

Exemplarily, the STA 120 may also be a wearable device. The wearable device may also be referred to as a wearable smart device, which is a general term of wearable devices developed by applying a wearable technology to intelligently design daily wearable objects, such as glasses, gloves, watches, clothing, shoes, or the like. The wearable device is directly worn on the body, or is a portable device integrated into a user's clothing or accessory. The wearable device is not only a hardware device, but also achieves powerful functions through software support, data interaction and cloud interaction. A generalized wearable smart device includes those with comprehensive functionality and large sizes that may not rely on smart phones to implement full or part of the functions, such as smart watches, or smart glasses; as well as those only focusing on specific application functions, that need to be used in cooperation with other devices such as a smart phone, such as various kinds of smart bracelets and smart jewelry for monitoring physical signs.

It should be understood that FIG. 1 is merely an example of the disclosure, which should not be understood as a limitation to the disclosure. For example, FIG. 1 exemplarily illustrates only one AP and two STAs. In some embodiments, the communication system 100 may include multiple APs as well as other numbers of STAs, which would not be limited in embodiments of the present disclosure.

FIG. 2A is a schematic diagram of an application scenario according to an embodiment of the disclosure.

As illustrated in FIG. 2A, the communication system 200 may include an AP MLD 210, a Non-AP MLD 220. The AP MLD 210 is an electronic device capable of forming a WLAN 230 based on a transmitted signal, such as a router, and a mobile phone having a hotspot function. The Non-AP MLD 220 is an electronic device connected to the WLAN 230 formed by the AP MLD 210, such as a mobile phone, a smart washing machine, an air conditioner, and an electronic lock. The Non-AP MLD 220 communicates with the AP MLD 210 through the WLAN 230. The AP MLD 210 may be a soft AP MLD, a mobile AP MLD, or the like.

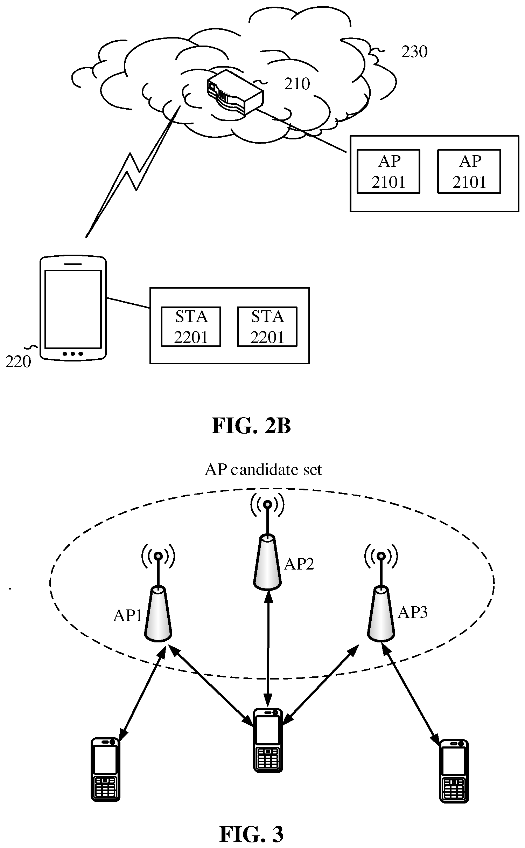

As illustrated in FIG. 2B, in the communication system of FIG. 2A, the AP MLD 210 is affiliated with at least two APs 2101, and the Non-AP MLD 220 is affiliated with at least two STAs 2201. Each AP is connected to a different STA in the Non-AP MLD 220 via a different link. An AP affiliated with AP MLD may also be referred to as an affiliated AP of the AP MLD. A STA affiliated with Non-AP MLD may also be referred to as a Non-AP STA affiliated with the Non-AP MLD or an affiliated STA of the Non-AP MLD.

In embodiments of the disclosure, the AP MLD 210 and the Non-AP MLD 220 may be terminal devices. The terminal device may refer to an access terminal, a User Equipment (UE), a user unit, a user station, a mobile station, a remote station, a remote terminal, a mobile device, a user terminal, a terminal, a wireless communication device, a user agent or a user apparatus. The access terminal may be a cellular telephone, a cordless phone, a Session Initiation Protocol (SIP) phone, a Wireless Local Loop (WLL) station, a Personal Digital Assistant (PDA), a handheld device with a wireless communication function, a computing device or other processing devices connected to a wireless modem, a vehicle-mounted device, a wearable device, a terminal device in the 5G network, or a terminal device in a future-evolved Public Land Mobile Network (PLMN) network, or the like.

The communication system 200 illustrated in FIG. 2A may further include a network device, and the network device may be an access network device that communicates with the terminal device. The access network device may provide communication coverage for a particular geographic area and may communicate with terminal devices located within the coverage area.

FIG. 2A exemplarily illustrates one AP MLD and one Non-AP MLD. Optionally, the communication system 200 may include multiple Non-AP MLDs connected to the WLAN 230, which would not be limited in embodiments of the present disclosure.

It should be noted that FIGS. 1, 2A and 2B only illustrates, by way of an example, the system to which the present disclosure is applied. Of course, the methods illustrated in the embodiments of the present disclosure may also be applied to other systems. In addition, the terms "system" and "network" in the present disclosure may usually be used interchangeably. In the disclosure, the term "and/or" refers to only an association relationship for describing associated objects and represents that three relationships may exist. For example, A and/or B may represent three cases: i.e., only A exists, both A and B exist, and only B exists. Furthermore, character "/" in the disclosure usually represents that previous and next associated objects form an "or" relationship. It should also be understood that the term "indication/indicate/indicating" mentioned in the embodiments of the disclosure may be a direct indication, or may be an indirect indication, or may represent existence of an association relationship. For example, A indicates B, which may represent that A directly indicates B, for example, B may be obtained by A; or may represent that A indirectly indicates B, for example, A indicates C, and B may be obtained by C; or may represent that an association relationship exists between A and B. It should also be understood that the term "corresponding/correspondence/correspond" mentioned in the embodiments of the present disclosure may indicate that there are direct or indirect correspondences between two objects, or may indicate that there is an association relationship between the two objects, or may have an indicating and being indicated relationship, a configuring and being configured relationship, or the like. It should also be understood that the terms "predefined/predefinition" or "predefined rules" mentioned in the embodiments of the present disclosure may be implemented by pre-storing corresponding codes or tables or by other means that may be used to indicate relevant information in devices (e.g., including terminal devices and network devices), specific implementations of which are not limited herein. For example, the "predefined" may refer to what is defined in protocol. It should also be understood that in the embodiments of the present disclosure, the "protocol" may refer to standard protocols in the communication field, and may include, for example, an IEEE 802.11 protocol, an LTE protocol, an NR protocol and related protocols applied in future communication systems, which are not limited in the present disclosure.

In order to facilitate understanding of the technical solutions of the embodiments of the disclosure, the related technologies of the embodiments of the disclosure will be described below, and the related technologies below can be arbitrarily combined with the technical solutions of the embodiments of the disclosure as options, and all of them belong to the scope of protection of the embodiments of the disclosure.

In the absence of special indication, an STA refers to an STA that is not affiliated with a Multi-Link Device (MLD).

### Multi-AP coordination

The multi-AP coordination includes a multi-AP coordinated preparation stage and a multi-AP coordinated transmission stage.

In the multi-AP coordinated preparation stage, the sharing AP obtains a TXOP and initiates a multi-AP coordination, and may transmit one frame to one or more APs in the same AP candidate set, to inquire about the intention of each AP to participate in multi-AP coordination. Each of the one or more APs will respond with a frame to inform the sharing AP whether the respective AP intends to participate in multi-AP coordination. If an AP intends to participate in the multi-AP coordination, the AP becomes a shared AP in the multi-AP coordination.

In the multi-AP coordinated transmission stage, the sharing AP and one or more shared APs may participate in the multi-AP coordinated transmission. Alternatively, the sharing AP may not participate in the multi-AP coordinated transmission, and two or more shared APs may participate in the multi-AP coordinated transmission.

FIG. 3 illustrates an AP candidate set as an example, the AP candidate set includes 3 APs: AP1, AP2, and AP3. In an example, AP1, as a sharing AP, may obtain a TXOP and initiate a multi-AP coordination; AP2 and AP3, as shared APs, may participate in the multi-AP coordination. AP1, AP2, and AP3 may participate in multi-AP coordination (such as a coordinated Orthogonal Frequency Division Multiple Access (OFDMA) or a joint transmission) in the TXOP. In yet another example, AP2, as a sharing AP, may obtain a TXOP and initiate a multi-AP coordination; AP1 and AP3, as shared APs, may participate in the multi-AP coordination. In the TXOP, AP1 and AP3 may participate in the multi-AP coordinated transmission, but AP2 does not participate in the multi-AP coordinated transmission.

When performing the multi-AP coordinated transmission, the sharing AP first transmits a trigger frame (for example, a Multi-AP coordinated transmission Trigger frame (MAP TF)) to each shared AP, allocates resources in time domain, frequency domain, spatial domain or power domain to each shared AP, and aligns the PPDU transmitted or requested by each shared AP at the Orthogonal Frequency Division Multiplexing (OFDM) symbol level or the PPDU level, to ensure the orthogonality of frequency domain symbols and the synchronization between APs.

In related arts, the multi-AP coordinated transmission includes the following modes: a coordinated OFDMA mode, a coordinated UL MU-MIMO mode, a coordinated beamforming mode, a cooperative spatial multiplexing mode, and a joint transmission mode.

### Coordinated OFDMA (C-OFDMA)

In multi-AP coordinated OFDMA transmission, two or more sharing APs and shared APs transmit respective Downlink Multi-User PPDUs (DL MU PPDUs) or transmit trigger frames to respective associated STAs for requesting uplink Trigger-based (TB) PPDUs (TB PPDUs) at different frequency portions of the coordinated transmission bandwidth.

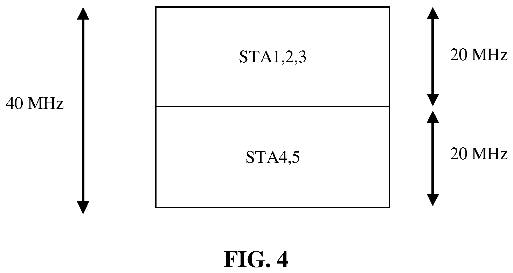

As illustrated in FIG. 4, the Basic service set (BSS) 1 is transmitted using a first frequency portion (upper 20M of 40M in FIG. 4), and the BSS 2 is transmitted using a second frequency portion (lower 20M of 40M in FIG. 4). Herein, STA1, STA2, and STA3 belong to the BSS1, and STA4 and STA5 belong to the BSS2, thereby achieving the orthogonality when performing the synchronous transmission.

### Coordinated UL Multiple User Multiple Input Output (MU-MIMO)

In a multi-AP coordinated UL MU-MIMO transmission, two or more sharing APs and shared APs request respective uplink TB PPDUs over the entire coordinated transmission bandwidth, and each non-AP STA is allocated with a different spatial stream.

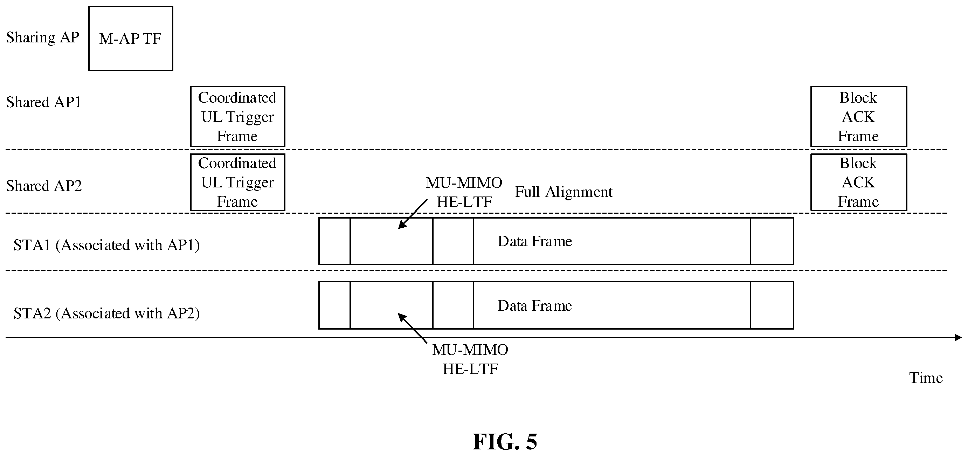

As illustrated in FIG. 5, the sharing AP transmits a M-AP TF to the shared AP1 and the shared AP2, for requesting uplink TB PPDUs. After receiving the M-AP TF, the shared AP1 and the shared AP2 respectively transmit a coordinated UL Trigger frame to an associated STA, to trigger the associated STA to transmit a data frame. STA1 and STA2 utilize different spatial flows for transmission of the data frame. The PPDU carrying the data frame also carries the MU-MIMO High Efficiency Long Training Field (HE-LTF), and the uplink data frames transmitted by STA1 and STA2 are fully aligned. After receiving the data frame, AP1 and AP2 use different spatial flows to transmit Block ACK (B-ACK, or BA) frames to STA1 and STA2.

### Coordinated beamforming (C-BF)

In the coordinated beamforming/Null Steering, when performing data transmission/reception, the AP may enhance the beam toward the target STA and steer the spatial radiation toward the non-target STAs to zero to achieve interference suppression.

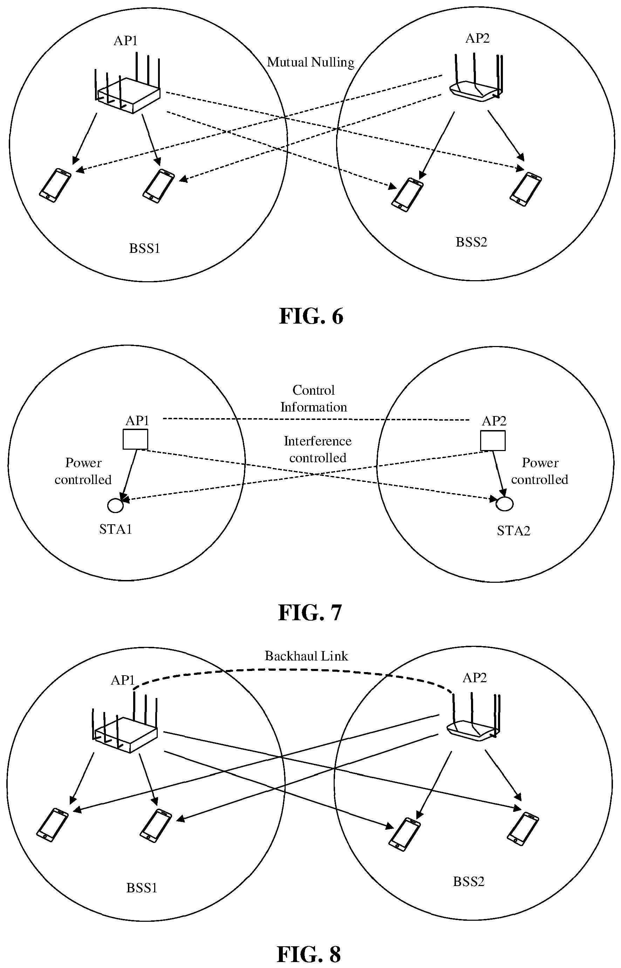

As illustrated in FIG. 6, in the BSS1, AP1 enhances the beam towards its associated STA while steering the beams towards STAs in BSS2 to zero. In BSS2, AP2 enhances the beam towards its associated STA while steering the beam towards STAs in BSS1 to zero.

### Collaborative space reuse (C-SR)

The C-SR refers to reducing interference between each other through joint power control, so that multiple APs can perform transmission in parallel and maximize the total throughput. Since C-SR does not require consideration of synchronization and CSI collection, does not necessitate Physical Layer (PHY) modifications, does not require protocol updates for STAs, it can be implemented with relatively low complexity. Compared to other multi-AP schemes, the C-SR can achieve low complexity and high performance (throughput and latency) gains.

As illustrated in FIG. 7, the AP1 and the AP2 exchange control information to perform power control on the transmission transmitted by the AP1 to the STA1 and the transmission transmitted by the AP2 to the STA2, and perform interference control on the transmission transmitted by the AP1 to the STA2 and the transmission transmitted by the AP2 to the STA1.

### Joint transmission

The joint transmission refers to that at least two APs simultaneously transmits shared data to the target STA, the transmissions occupy exactly the same frequency domain resource (coordinated bandwidth), data of different Aps are distinguished through different spatial flows, and this process is transparent to the receiving STA.

As illustrated in FIG. 8, a backhaul link between AP1 and AP2 performs shared data interaction, AP1 and AP2 simultaneously transmit shared data to STAs in BSS1 and BSS2 through exactly the same frequency domain resources, and one STA can receive the shared data from multiple APs.

### Multi-AP coordinated transmission Trigger frame Design

In related arts, partial fields in the multi-AP coordinated transmission Trigger frame are used to instruct the related parameters of the first one DL MU PPDU to be transmitted by each shared AP participating in the multi-AP coordinated transmission after the Short Interframe Space (SIFS) of the frame, and the indicated parameters include: a PPDU length, a multi-AP coordinated type, puncturing channel information, a number of symbols and a modulation mode of an Extremely high throughput-Signal (EHT-SIG), and spatial flow allocation information.

Herein, the common information is indicated in a Trigger Dependent Common Info subfield or a Trigger Dependent User Info subfield in a Special User Info field. The user information is indicated in an EHT variable User Info subfield.

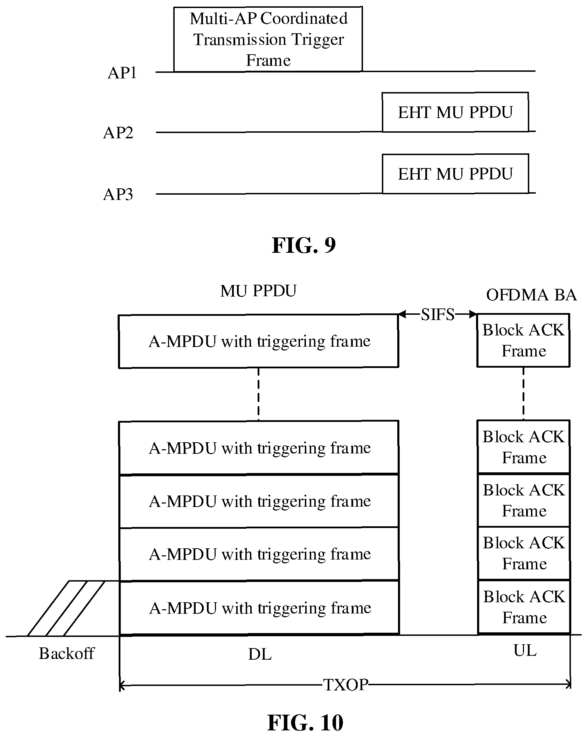

In an example, as illustrated in FIG. 9, AP1, as a sharing AP, transmits a Multi-AP coordinated transmission Trigger frame to AP2 (shared AP) and AP3 (shared AP) , and AP2 (shared AP) and AP3 (shared AP) transmits the EHT MU PPDU based on information configured in the Multi-AP coordinated transmission Trigger frame.

### Acknowledgment procedure in DL MU PPDU

For a DL MU PPDU transmission, two manners of an AP requesting a BlockAck from a non-AP STA are defined.

In a first manner, the data frame carries a trigger frame.

When a non-AP STA receives a DL MU PPDU containing a QoS Data frame or QoS Null frame with the High-efficiency Trigger PPDU Acknowledgement (HETP Ack) acknowledgement policy, a Multi-User Block Acknowledgement Request (MU-BAR) Trigger frame, a Groupcast with Retries (GCR) MU-BAR Trigger frame, or a management frame requesting an acknowledgement, the non-AP STA shall transmit an immediate acknowledgement frame based on the scheduling information in the Trigger frame or the Triggered Response Scheduling (TRS) control subfield carried in the MU PPDU. As illustrated in FIG. 10, in the obtained transmission opportunity, an Aggregate Medium Access Control (MAC) Protocol Data Unit (A-MPDU) transmitted in the downlink carries a trigger frame, and a BA frame is responded in the uplink. If the non-AP STA does not receive a trigger frame including the scheduling information or a frame carrying the TRS control subfield, the non-AP STA does not respond.

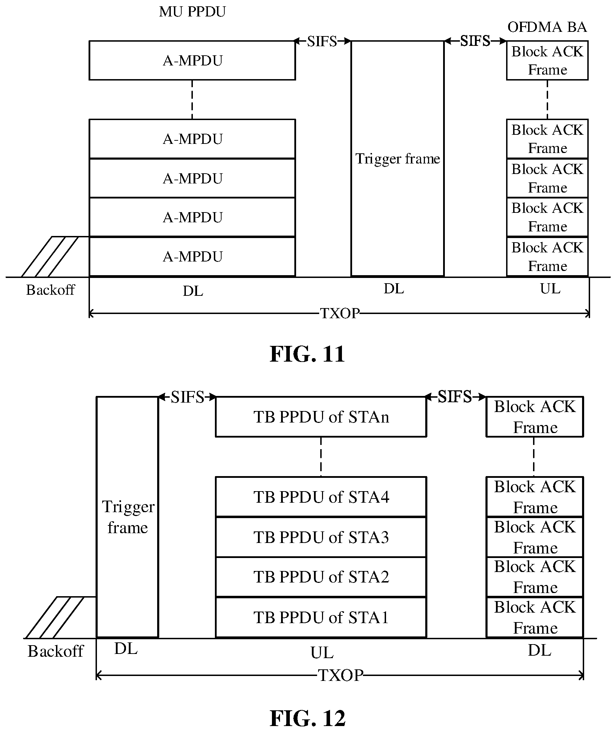

In a second manner, the AP may request acknowledgement frames from multiple non-AP STAs using the MU-BAR Trigger frame or the GCR MU-BAR Trigger frame, before which the AP transmits QoS data frames with a Block Ack ack policy to these non-AP STAs, or the AP does not receive immediate acknowledgment frames from these non-AP STAs after transmitting QoS data frames with a HETP Ack ack policy in the MU PPDU. As illustrated in FIG. 11, after a downlink MU PPDU is transmitted, if a BA frame is not received within the SIFS, then after the SIFS following the MU PPDU, a downlink Trigger frame is transmitted, and after the SIFI of the Trigger frame, an uplink BA frame is transmitted.

Here, the MU-BAR Trigger frame or the GCR MU-BAR Trigger frame or the management frame requesting an acknowledgement can be understood as a trigger frame. A frame with a Block Ack ack policy or a HETP Ack ack policy can be understood as a data frame. An acknowledgement frame may include a BA frame.

### An acknowledgement procedure in the UL MU PPDU

In an Uplink Multi-User (UL MU) transmission, an AP receives frames from multiple STAs and requires an immediate acknowledgment frame (e.g., a QoS data frame carrying a Normal Ack or an Implicit BAR ack policy, a management frame of a non-Action No Ack), and should transmit the immediate acknowledgment in the form of a Single User (SU) PPDU or an MU PPDU. The immediate acknowledgment may be an Ack frame, a Compressed BlockAck frame, or a Multi-STA BlockAck frame.

When the AP receives the UL frame requiring an immediate acknowledgment, the AP should transmit the DL acknowledgment after the SIFS, whether the medium is busy or idle. When the AP transmits the immediate acknowledgment in the MU PPDU in response to an A-MPDU in the TB PPDU, the AP shall transmit the immediate acknowledgment within the 20 MHz subchannel where the standalone pre-HE/EHT modulated field of the TB PPDU transmitted by the STA is located.

There are three manners in which an AP responds with a DL BlockAck.

In the first manner, multiple BlockAck frames illustrated in FIG. 12 are transmitted in a DL MU manner.

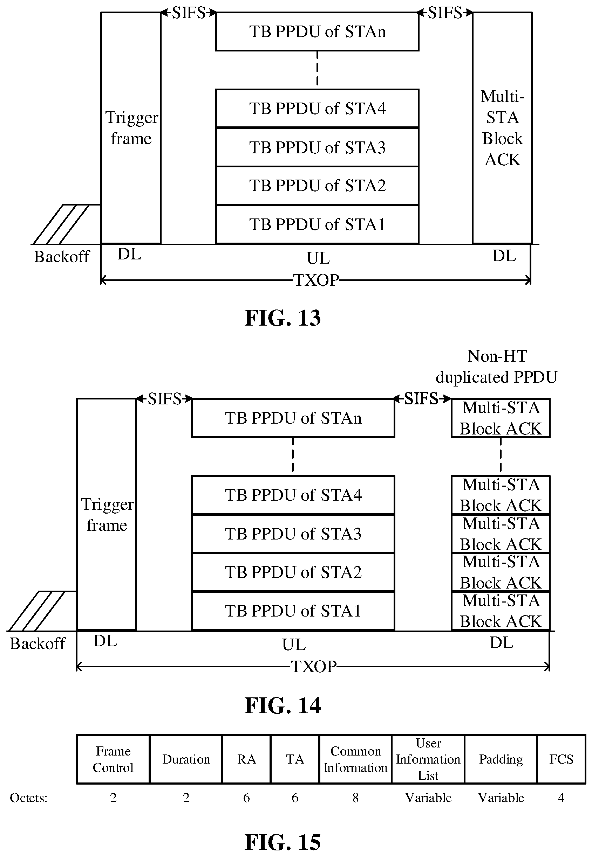

In the second manner, a multi-STA BlockAck frame illustrated in FIG. 13 is transmitted in a non-HT PPDU, a HT PPDU, a VHT PPDU, a HE SU PPDU, or a HE ER SU PPDU.

In the third manner, a multi-STA BlockAck frame illustrated in FIG. 14 is transmitted in a non-HT duplicated PPDU.

### Trigger frame

In the standard, when performing an uplink TB PPDU transmission, the AP first transmits a trigger frame, and each non-AP STA prepare and transmit a TB PPDU based on parameters, such as an Uplink Length (UL Length), an Uplink BandWidth (UL BW), a Low-Density Parity-Check (LDPC) extra symbol segment, a standalone Forward Error Correction (FEC) padding factor, a Packet Extension (PE) disambiguity, a Resource Unit (RU) allocation, an Uplink FEC (UL FEC) coding type, and an Uplink EHT Modulation and Coding Scheme (MCS) (UL EHT-MCS), indicated by the received trigger frame.

As illustrated in FIG. 15, a trigger frame includes a Common Info field, a User Info List field, and a Padding field. As illustrated in FIG. 15, the rigger frame further includes the following fields: a Frame Control field, a Duration field, a Receiving Address (RA) field, a Transmitting Address (TA) field. The User Info List field includes multiple user information fields. The user information field may be understood as the EHT variant User Info field.

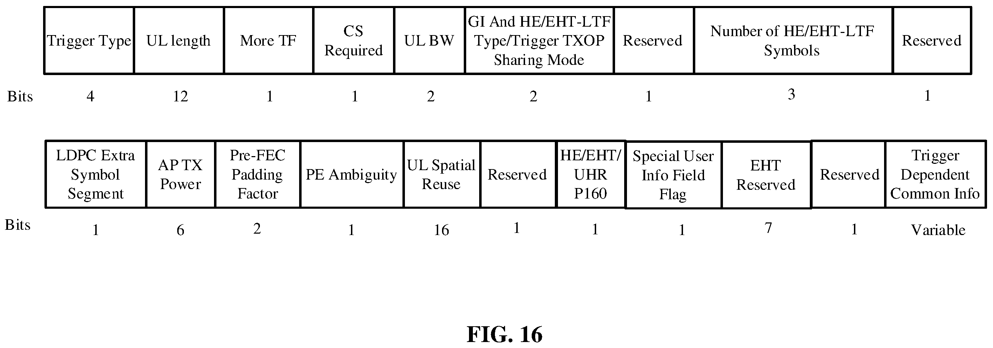

The Common Info field carries common information of each STA, and as illustrated in FIG. 16, the Common Info field includes the following fields: a Trigger Type field, an UL Length field, a More TF field, a (Carrier Sensing) CS Required field, an Uplink Bandwidth field, a GI And HE/EHT-LTF Type/Trigger TXOP Sharing Mode field, a Reserve field, a Number Of HE/EHT-LTF Symbols field, a LDPC Extra Symbol Segment field, an AP TX power field, a Pre-FEC Padding Factor field, a PE Disambiguity field, an UL Spatial Reuse field, a HE/EHT/UHR P160 field, a Special User Info Field Flag field, an EHT Reserved field, a Trigger Dependent Common Info field.

The User Info List field consists of one or more User Info fields. For the EHT Trigger frame, the User Info List field includes one Special User Info field and multiple EHT Variant User Info fields.

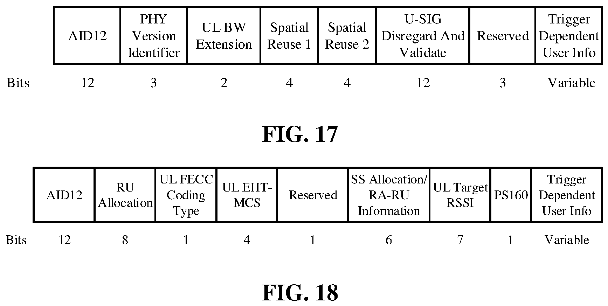

The Special User Info field carries a necessary U-SIG subfield for requesting the EHT TB PPDU. The Special User Info field is located after the Common Info field in the trigger frame. The format of the Special User Info field is as illustrated in FIG. 17, where the AID12 subfield of the Special User Info field should be set to 2007. As illustrated in FIG. 17, the Special User Info field further includes the following fields: a PHY Version Identifier field, an UL BW Extension field, a Spatial Reuse 1 field, a Spatial Reuse 2 field, a U-SIG Disregard And Validate field, a Trigger Dependent User Info field, and a Reserved field.

The EHT variant User Info field carries information of the non-AP STA indicated by the AID 12, the format of the EHT variant User Info field is as illustrated in FIG. 18, and the EHT variant User Info field includes the following fields: an AID12 field, an RU Allocation field, an UL FEC Coding Type field, an UL EHT-MCS field, a Reserved field, a Spatial Stream (SS) Allocation/RU for Random Access (RA-RU) Information field, an UL Target RSSI field, a PS 160 field, a Trigger Dependent User Info field.

The Padding field may be present in the trigger frame to extend the frame length, so that the receiving STA has sufficient time to prepare to respond with a PPDU for transmission after the SIFS following the receipt of the trigger frame.

In related arts, in multi-AP coordinated DL transmission: the Multi-AP coordinated transmission trigger frame only indicates the transmission parameters of the first one DL PPDU after the SIFS following the trigger frame, but does not indicate parameters of each PPDU in the subsequent process of BlockAck feedback by each STA, so that the orthogonality of frequency domain symbols and the synchronization between APs cannot be guaranteed. In addition, if the DL joint transmission is performed, the sharing AP does not allocate RUs in the frequency domain to each shared AP in advance, which may cause an RU allocation conflict between the shared APs when requesting the BlockAck.

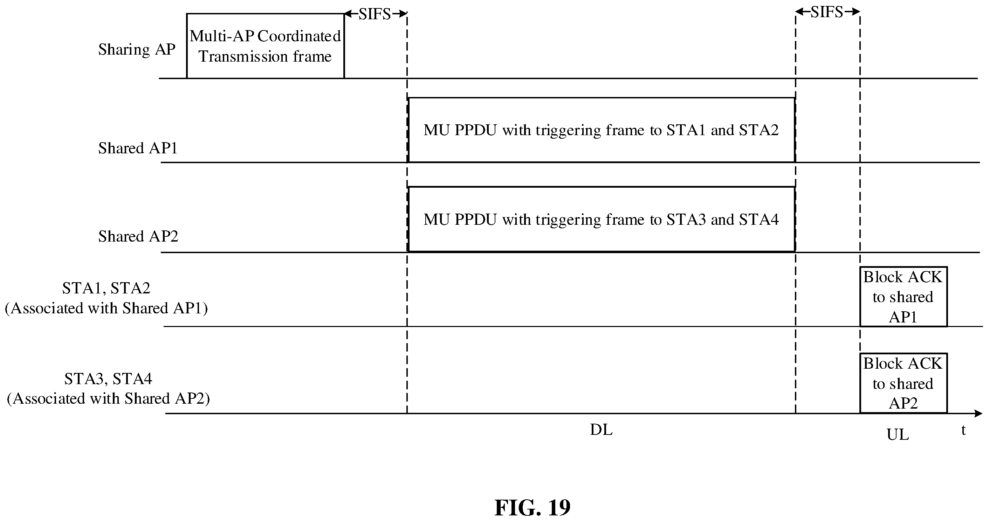

In an example, when performing the multi-AP coordinated DL transmission illustrated in FIG. 19, if the BA frame is responded in the first manner, the sharing AP only indicates in the first Multi-AP coordinated transmission Trigger frame a transmission parameter of the MU PPDU, but does not indicate the PPDU parameter for transmitting the BA frame, resulting in non-alignment for various fields inside the PPDU, and the synchronization between APs and the orthogonality of frequency domain symbols cannot be guaranteed.

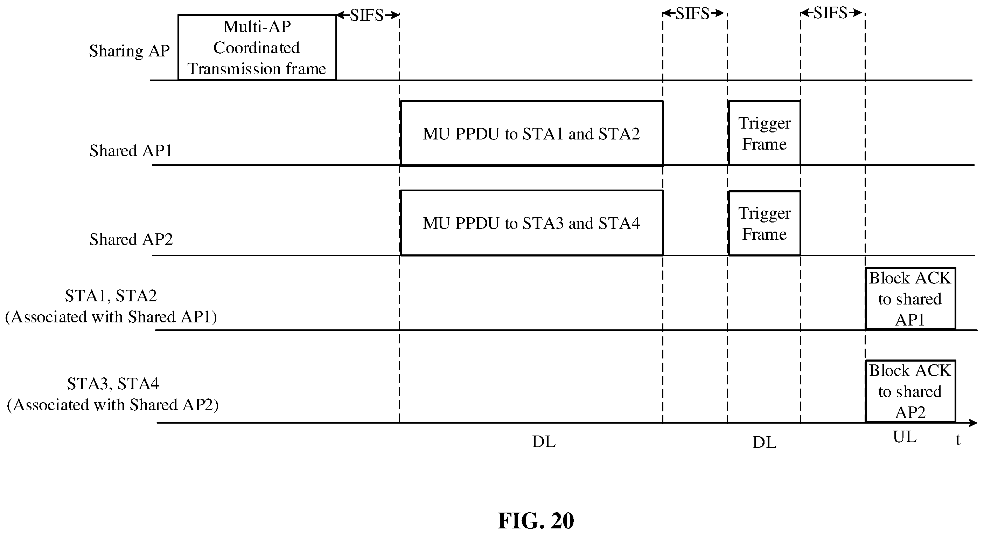

In an example, when the multi-AP coordinated DL transmission illustrated in FIG. 20 is performed, if the BA frame is responded in the second manner, the sharing AP only indicates in the first one Multi-AP coordinated transmission Trigger frame the transmission parameter of the MU PPDU, but does not indicate the PPDU parameter for transmitting the subsequent trigger frame and transmitting the BA frame, resulting in non-alignment for various fields inside the PPDU, and the synchronization between APs and the orthogonality of frequency domain symbols cannot be guaranteed.

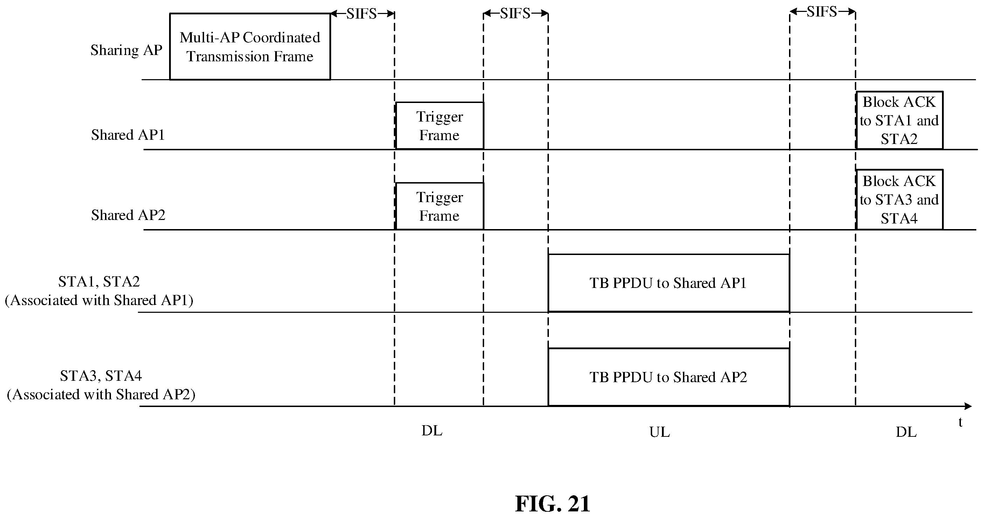

In related arts, in multi-AP coordinated UL transmission:
When the multi-AP coordinated UL transmission is performed, as illustrated in FIG. 21, if the AP responds with an Ack in the downlink, the sharing AP only indicates in the first Multi-AP coordinated transmission trigger frame a transmission parameter of the PPDU for transmitting the trigger frame, but does not indicate a PPDU parameter for transmitting the subsequent TB PPDU and transmitting the BlockAck, resulting in non-alignment for various fields inside the PPDU, and the synchronization between APs and the orthogonality of frequency domain symbols cannot be guaranteed. In addition, if the coordinated UL MU-MIMO is performed, the sharing AP does not allocate RUs in frequency domain to each shared AP in advance, which may cause an RU usage conflict between the shared APs when requesting the BlockAck.

For convenience of understanding of the technical solutions of the embodiments of the disclosure, the technical solutions of the disclosure will be described in detail below with reference to specific embodiments. The above related technologies may be used as alternative solutions and may be combined with the technical solutions of the embodiments of the disclosure in various ways, all of which belong to the scope of protection of the embodiments of the disclosure. The embodiments of the disclosure include at least some of the following contents.

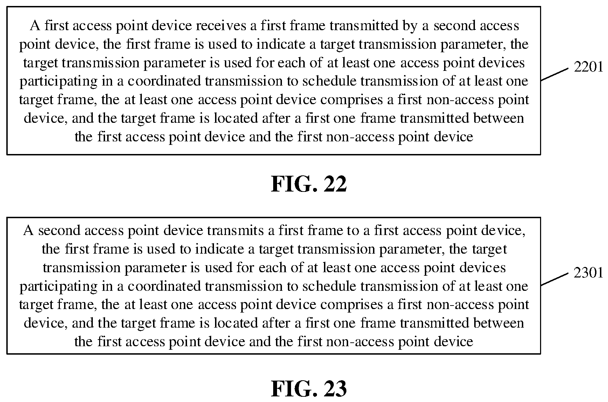

As illustrated in FIG. 22, the method for transmission control provided in an embodiment of the disclosure is applied to a first access point device, and includes a following operation S2201.

At the operation S2201, the first access point device receives a first frame transmitted by a second access point device, where the first frame is used to indicate a target transmission parameter, the target transmission parameter is used for each of at least one access point device participating in a coordinated transmission to schedule transmission of at least one target frame, the at least one access point device includes a first non-access point device, the target frame is located after a first one frame transmitted between the first access point device and the first non-access point device.

As illustrated in FIG. 22, the method for transmission control provided in the embodiment of the disclosure is applied to a second access point device, and includes a following operation S2301.

At the operation S2301, the second access point device transmits a first frame to a first access point device, where the first frame is used to indicate a target transmission parameter, the target transmission parameter is used for each of at least one access point device participating in a coordinated transmission to schedule transmission of at least one target frame, the at least one access point device includes a first non-access point device, the target frame is located after a first one frame transmitted between the first access point device and the first non-access point device.

Hereinafter, the method for transmission control illustrated in FIG. 22 or FIG. 23 will be further described.

The second access point device transmits a first frame to the first access point device, wherein the first frame is used to indicate a target transmission parameter used when the at least one access point device participating in the coordinated transmission transmits the target frame.

The first access point device is any one of the multiple access point devices participating in the coordinated transmission. It is understood that the multiple access point devices participating in the coordinated transmission can receive the first frame transmitted by the second access point device, and control transmission between themselves and the associated at least one non-access point device based on the target transmission parameter indicated by the first frame.

In the embodiment of the disclosure, the target transmission parameter is used to control transmission of a non-first one frame after a respective first one frame between multiple access point devices participating in the coordinated transmission and associated at least one non-access point device.

In some embodiments, the target transmission parameter includes at least one of: a length of the PPDU carrying the target frame; a Guard interval (GI) and Long Training field (LTF) type; a Number of LTF symbols; or an RU or MRU.

In the embodiment of the disclosure, the Type of GI and LTF may include one of: 1×LTF+1.6 µs GI, 2xLTF+1.6 µs GI, 4xLTF+3.2 µs GI, or the like.

In the embodiment of the disclosure, the number of LTF symbols may include one of: 1, 2, 4, 6, 8, or the like.

The length of the PPDU carrying the target frame, the GI and the LTF type, and the number of LTF symbols are used to ensure the synchronization among the at least one access point device participating in the coordinated transmission and the orthogonality of frequency domain symbols. In this case, among the multiple access point devices participating in the coordinated transmission, the length of the PPDU carrying the target frame, the Type of GI and LTF, and the number of LTF symbols configured by the first frame are used to control transmission of the target frame, to ensure the synchronization between different access point devices and the orthogonality of frequency domain symbols.

The RU or MRU is used to ensure that there is no RU conflict among the at least one access point device participating in the coordinated transmission. In this case, the multiple access point devices participating in the coordinated transmission control the transmission of the target frame by using the RU configured by the first frame, to ensure that the RUs between different access point devices do not conflict.

In the embodiment of the disclosure, for the first access point device participating in the coordinated transmission, the target frame may include at least one of: a first acknowledgement frame, where the first acknowledgement frame is an acknowledgement frame transmitted by a non-access point device to an access point device in a downlink transmission, and in this case, the acknowledgement frame is used for acknowledgement for a first data frame in the downlink transmission, and the first data frame may or may not carry a trigger frame; a first trigger frame, which is a trigger frame transmitted by the access point device to a non-access point device for triggering the first acknowledgement frame when the first data frame does not carry the trigger frame; a second data frame, which is a data frame transmitted by the non-access point device to the access point device in an uplink transmission; or a second acknowledgement frame, which is an acknowledgement for the second data frame transmitted by the access point device to the non-access point device.

It can be understood that the first acknowledgement frame and the first trigger frame are used for a scenario for downlink MU PPDU transmission. The second data frame and the second acknowledgement frame are used for a scenario for uplink MU PPDU transmission.

In the multi-AP coordinated transmission scenario illustrated in FIG. 19 or FIG. 20, the first acknowledgement frame is an uplink BA frame.

In the multi-AP coordinated transmission scenario illustrated in FIG. 20, the first trigger frame is a downlink Trigger frame.

In the multi-AP coordinated transmission scenario illustrated in FIG. 21, the first data frame is a data frame carried in an uplink TB PPDU.

In the multi-AP coordinated transmission scenario illustrated in FIG. 21, the second acknowledgement frame is a downlink BA frame.

In the embodiment of the disclosure, the target frame may include a first target frame and a second target frame, the first target frame is an uplink frame, and the second target frame is a downlink frame. It is understood that the first target frame includes a first acknowledgement frame and/or a second data frame. The second target frame includes a first trigger frame and/or a second acknowledgement frame.

If the target frame is a downlink frame, after receiving the first frame, the AP participating in the coordinated transmission controls the transmission of the target frame based on the target transmission parameter for controlling the downlink frame indicated by the first frame. If the target frame is an uplink frame, after receiving the first frame, the AP participating in the coordinated transmission transmits the target transmission parameter for controlling the uplink frame indicated by the first frame to the associated non-access point device, so that the non-access point device transmits the uplink frame based on the received target transmission parameter for controlling the uplink frame.

In an example, the target frame includes a first acknowledgement frame, and in the multi-AP coordinated transmission scenario illustrated in FIG. 19, the first acknowledgement frame is an uplink BA frame, the second access point device is a sharing AP, and the APs participating in the coordinated transmission include a shared AP1 and a shared AP2. STA1 and STA2 transmit the BA frame to the shared AP1 using the transmission parameter for controlling the uplink BA frame configured by the sharing AP, respectively, and STA3 and STA4 transmit the BA frame to the shared AP2 using the transmission parameter for controlling the uplink BA frame configured by the sharing AP, thereby controlling the transmission of the BA frames received by the shared AP1 and the shared AP2.

In an example, the target frame includes a first acknowledgement frame and a first trigger frame. In the multi-AP coordinated transmission scenario illustrated in FIG. 20, the first acknowledgement frame is an uplink BA frame, the first trigger frame is a Trigger frame, the second access point device is a sharing AP, and the APs participating in the coordinated transmission include a shared AP1 and a shared AP2. The shared AP1 and shared AP2 control the Trigger frame by using the transmission parameter for the Trigger frame allocated by the sharing AP, and STA1 and STA2 respectively transmit the BA frame to the shared AP1 using the transmission parameter for controlling the uplink BA frame configured to the shared AP1 by the sharing AP, and STA3 and STA4 respectively transmit the BA frame to the shared AP2 using the transmission parameter for controlling the uplink BA frame configured to the shared AP2 by the sharing AP, thereby controlling the transmission of the BA frames received by the shared AP1 and the shared AP2.

In an example, the target frame includes a second data frame and a second acknowledgement frame, in the multi-AP coordinated transmission scenario illustrated in FIG. 21, the second data frame is a data frame carried in a TB PPDU, the second acknowledgement frame is a downlink BA frame, the second access point device is a sharing AP, and the APs participating in the coordinated transmission include a shared AP1 and a shared AP2. STA1 and STA2 transmit the TB PPDUs to the shared AP1 by using the transmission parameter for controlling the TB PPDU frame configured by the sharing AP to shared AP1, STA3 and STA4 transmit the TB PPDUs to the shared AP2 by using the transmission parameter for controlling the TB PPDU frame configured by the sharing AP to shared AP2, thereby controlling the transmission of TB PPDUs received by the shared AP1 and the shared AP2. The shared AP1 and the shared AP2 control the transmission of the BA frames by using the transmission parameters allocated by the sharing AP for BA frames.

In the embodiment of the disclosure, a second access point device configures to multiple access point devices participating in the coordinated transmission a parameter for controlling the transmission of a non-first one frame between the multiple access point devices participating in the coordinated transmission and associated non-access point devices. Thereby, the second access point device centrally controls the transmission for the multiple access point devices participating in the coordinated transmission, achieving control over the multi-access point device coordinated transmission and ensuring the normal progression of transmissions for different access point devices during the multi-AP coordinated transmission.

In some embodiments, the second access point device is an access point device that initiates a multi-access point device coordination.

It is understood that the second access point device is a sharing AP, and the first access point device is a shared AP.

The sharing AP transmits the first frame to the shared AP for configuring the target transmission information, and thus configures the target transmission information in the preparation stage of the multi-AP coordination. In this case, it can be understood that the PPDU carrying the first frame is the MU PPDU.

In some embodiments, the target transmission parameter includes a first transmission parameter for scheduling transmission of the first target frame, and the first target frame is transmitted by the first non-access point device to the first access point device.

The first target frame is an uplink frame transmitted by the non-access point device to the access point device. A first transmission parameter for controlling transmission of the first target frame includes at least one of: a first length, where the first length is a length of a first PPDU carrying the first target frame; a first type, where the first type is a type of a GI and LTF of the first PPDU; or a first number of symbols, where the first number of symbols is a number of LTF symbols of the first PPDU.

In some embodiments, the first target frame includes at least one of: a first acknowledgement frame for acknowledgement of a first data frame transmitted by the first access point device, where the first data frame carries or does not carry a trigger frame; or a second data frame, where the second data frame is a trigger-based data frame received by the first access point device.

In some embodiments, at least one of the following in the first transmission parameter is indicated by a first field in the first frame: a first length, where the first length is a length of a first PPDU carrying the first target frame; a first type, where the first type is a type of a GI and LTF of the first PPDU; or a first number of symbols, where the first number of symbols is a number of symbols in the LTF of the first PPDU.

In an embodiment of the disclosure, the first field may indicate one or more of a first length, a first type, or a first number of symbols.

In an example, the first field indicates the first length.

In an example, the first field indicates the first length and the first type.

In an example, the first field indicates the first length, the first type, and the first number of symbols.

In the embodiment of the disclosure, the transmission parameter not indicated by the first field in the first transmission parameter may be determined by the transmission parameter of another frame or may be preset or predefined in a protocol.

In some embodiments, the manner for the first field indicating the first transmission parameter includes the following manner 1A or manner 1B.

In the manner1A, the first field includes: a first subfield, a second subfield, and a third subfield.

The first length is indicated by the first subfield.

The first type is indicated by the second subfield.

The first number of symbols is indicated by the third subfield.

In the manner 1B, the first field includes: a first subfield.

The first length is indicated by the first subfield.

The first type is the same as a type of a GI and an LTF of a second PPDU carrying a second frame.

The first number of symbols is the same as a number of LTF symbols of the second PPDU.

The first subfield is used to indicate the first length. In some embodiments, if the first target frame is the first acknowledgement frame, the first subfield may be defined as a Length for PPDU carrying acknowledgement subfield. If the first target frame is the second data frame, the first subfield may be defined as a length subfield of the UL TB PPDU.

The second subfield is used to indicate the first type. In some embodiments, if the first target frame is the first acknowledgement frame, the second subfield may be defined as a Type of GI and LTF for PPDU carrying acknowledgement subfield. If the first target frame is the second data frame, the second subfield may be defined as a Type of GI and LTF for UL TB PPDU subfield.

The second field may indicate different types of LTFs based on different values.

In an example, the value of the second field may be one of 0 to 3. If the value of the second field is 0, it indicates that the first type is 1×LTF+1.6 µs GI. If the value of the second field is 1, it indicates that the first type is 2×LTF+1.6 µs GI. If the value of the second field is 2, it indicates that the first type is 4×LTF+3.2 µs GI. If the value of the second field is 3, it indicates that it is reserved.

The third subfield is used to indicate the first number of symbols. In some embodiments, if the first target frame is the first acknowledgement frame, the second subfield may be defined as a Number of LTF symbols for PPDU carrying acknowledgement subfield. The LTF may be HE/EHT/UHR-LTF, the Number of LTF symbols for acknowledgement subfield may be replaced with the Number of HE/EHT/UHR-LTF symbols for PPDU carrying acknowledgement subfield. If the first target frame is the second data frame, the third subfield may be defined as a Number of LTF symbols for UL TB PPDU subfield.

The third field may indicate different numbers of LTF symbols based on different values. In an example, a value of the third field may be one of 0 to 7. If the value of the third field is 0, it indicates that the first number of symbols is 1. If the value of the third field is 1, it indicates that the first number of symbols is 2. If the value of the third field is 2, it indicates that the first number of symbols is 4. If the value of the third field is 3, it indicates that the first number of symbols is 6. If the value of the third field is 4, it indicates that the first number of symbols is 8. If the value of the third field is one of 5 to 7, it indicates that the number of symbols is reserved.

In some embodiments, if the first target frame is a first acknowledgement frame, the second frame is a first data frame transmitted by the first access point device before the first acknowledgement frame.

Optionally, if the first target frame is a second data frame, the second frame is a second trigger frame of the first access point device, and the second trigger frame is used for triggering transmission of the second data frame.

Taking the first target frame as the first acknowledgement frame as an example, and the first transmission parameter indicated by the first field only includes the first length, the Type of GI and LTF of the first acknowledgement frame is the same as the Type of GI and LTF of the first data frame acknowledged by the first acknowledgement frame, and the number of LTF symbols of the first acknowledgement frame is the same as the number of LTF symbols of the first data frame.

Taking the first target frame as a second data frame as an example, and the first transmission parameter indicated by the first field only includes the first length, the Type of GI and LTF of the second data frame is the same as the Type of GI and LTF of the second trigger frame that triggers the second data frame, and the number of LTF symbols of the second data frame is the same as the number of LTF symbols of the second trigger frame.

In some embodiments, the target transmission parameter further includes a second transmission parameter for scheduling transmission of a second target frame, and the second target frame is transmitted by the first access point device to the first non-access point device.

In this case, the first field is used to indicate not only the transmission parameter of the first target frame (i.e., the first transmission parameter), but also the transmission parameter of the second target frame (i.e., the second transmission parameter).

The second target frame is a downlink frame transmitted by the access point device to the non-access point device. The second transmission parameter for controlling transmission of the second target frame includes at least one of: a second length, where the second length is a length of a third PPDU carrying the second target frame; a second type, where the second type is a type of a GI and an LTF of the third PPDU; or a second number of symbols, where the second number of symbols is a number of LTF symbols of the third PPDU.

In some embodiments, the second target frame includes at least one of: a first trigger frame or a second acknowledgement frame.

In some embodiments, at least one of following in the second transmission parameter is indicated by the first field: a second length, where the second length is a length of a third PPDU carrying the second target frame; a second type, where the second type is a type of a GI and an LTF of the third PPDU; or a second number of symbols, where the second number of symbols is a number of symbols in the LTF of the third PPDU.

In an example, the first field indicates the second length.

In an example, the first field indicates the second length and the second type.

In an example, the first field indicates the second length, the second type, and the second number of symbols.

In the embodiment of the disclosure, the transmission parameter not indicated by the first field in the second transmission parameter may be determined by the transmission parameter of another frame or may be preset or predefined in a protocol.

In a scenario in which the second target frame is the first trigger frame independent of the first data frame for triggering the first acknowledgement frame.

It is understood that in this case, the first target frame is the first acknowledgement frame.

The manner for the second field indicating the second transmission parameter includes the following manner 2A, manner 2B or manner 2C.

In the manner 2A, the first field includes: a first subfield.

The first length and the second length are indicated by the first subfield.

In the manner 2B, the first field includes: a fourth subfield.

The second length is indicated by the fourth subfield.

In the manner 2C, the first field includes a fourth subfield, a fifth subfield, and a sixth subfield.

The second length is indicated by the fourth subfield.

The second type is indicated by the fifth subfield.

The second number of symbols is indicated by the sixth subfield.

The first field here is used to indicate the first length and the second length. In some embodiments, the first field here may be defined as a UL Length for PPDU carrying acknowledgement sequences subfield, where the acknowledgement sequences include a trigger frame and a BA frame.

The fourth subfield is used to indicate the second length. In some embodiments, the fourth subfield may be defined as a UL Length for PPDU carrying trigger frame subfield.

The fifth subfield is used to indicate the second type. In some embodiments, the fifth subfield may be defined as a Type of GI and LTF for PPDU carrying trigger frame subfield.

The sixth subfield is used to indicate the second number of symbols. In some embodiments, the sixth subfield may be defined as a Number of -LTF symbols for PPDU carrying trigger frame subfield. The LTF may be HE/EHT/UHRLTF, the Number of-LTF symbols for PPDU carrying trigger frame subfield may be replaced with a Number of HE/EHT/UHR-LTF symbols for PPDU carrying trigger frame subfield.

In the manner 2A, for the second transmission parameter, the first field includes a first sub-field indicating the first length, and the first sub-field is further used to indicate the second length. In this case, the first length and the second length have the same size.

In the manner 2B, for the second transmission parameter, the first field includes a fourth sub-field indicating the second length. In this case, the first field may include a first field and a fourth field indicating the first length and the fourth length, respectively.

For the manners 2A and 2B, in some embodiments, the third PPDU is a non-HT PPDU or a non-HT duplicated PPDU.

In the manners 2A and 2B, when the third PPDU carrying the first trigger frame is the non-HT PPDU or the non-HT duplicated PPDU, the first field does not need to indicate the LTF type and the number of LTF symbols.

In the manner 2C, for the second transmission parameter, the first field includes a fourth subfield indicating the second length, a fifth subfield indicating the second type, and a sixth subfield indicating the second symbol data.

In the embodiment of the disclosure, the manner for the fifth subfield to indicate the second type is the same as the manner for the second subfield to indicate the first type, and/or the manner for the sixth subfield to indicate the second number of symbols is the same as the manner for the third subfield to indicate the first number of symbols, which is not repeated here.

It can be understood that in a case where the first field indicates the first transmission parameter and the second transmission parameter, any one of the manner 1A or the manner 1B for the first field to indicate the first transmission parameter may be combined with any one of the manner 2A, 2B, or 2C for the first field to indicate the second transmission parameter.

Taking the combination of the manner 1A and the manner 2A as an example, the first field includes a first subfield, a second subfield, and a third subfield, and the first subfield is used to indicate the first length of the first acknowledgement frame and the second length of the first trigger frame. In this case, the target transmission parameter indicated by the first field includes the first length, the first type, and the first number of symbols of the first acknowledgement frame, and the second length of the first trigger frame, where the first length and the second length have the same size.

Taking the combination of the manner 1A and the manner 2B as an example, the first field includes a first subfield, a second subfield, a third subfield, and a fourth subfield. The target transmission parameter indicated by the first field includes the first length, the first type, and the first number of symbols of the first acknowledgement frame, and the second length of the first trigger frame, where the first length and the second length are independently indicated.

Taking the combination of the manner 1A and the manner 2C as an example, the first field includes a first subfield, a second subfield, a third subfield, a fourth subfield, a fifth subfield, and a sixth subfield. In this case, the target transmission parameter indicated by the first field includes the first length, the first type, and the first number of symbols of the first acknowledgement frame, and the second length, the second type, and the second number of symbols of the first trigger frame.

Taking the combination of the manner 1B and the manner 2A as an example, the first field includes a first field, the first subfield is used to indicate the first length, and the fourth subfield is used to indicate the second length. At this time, the target transmission parameter indicated by the first field includes the first length of the first acknowledgement frame and the second length of the first trigger frame, where the first type of the first acknowledgement frame is the same as the GI and TLF type of the first data frame, and the first number of symbols of the first acknowledgement frame is the same as the number of symbols in the TLF of the first data frame.

Taking the combination of the manner 1B and the manner 2B as an example, the first field includes a first subfield and a fourth subfield, and the target transmission parameter indicated by the first subfield includes the first length and the second length, and the first length and the second length are independent, where the first type is the same as the GI and TLF type of the first data frame, and the first number of symbols is the same as the number of symbols in the TLF of the first data frame.

Taking the combination of the manner 1B and the manner 2C as an example, the first field includes a first subfield, a fourth subfield, a fifth subfield, and a sixth subfield. The target transmission parameter indicated by the first field includes the first length of the first acknowledgement frame, the second length, the second type, and the second number of symbols of the first trigger frame, and the first length and the second length are independent, where the first type of the first acknowledgement frame is the same as the GI and TLF type of the first data frame, and the first number of symbols of the first acknowledgement frame is the same as the number of symbols in the TLF of the first data frame.

In a scenario in which the second target frame is the second acknowledgement frame for acknowledging the second data frame, it is understood that in this case, the first target frame is the second data frame.

The manner for indicating the second transmission parameter includes the following manner 2D or manner 2E.

In the manner 2D, the second length is the same as a length of a fourth PPDU carrying a second trigger frame, the second trigger frame is used for triggering the second data frame.

The second type is the same as a Type of GI and LTF of the fourth PPDU.

The second number of symbols is the same as a number of symbols in the LTF of the fourth PPDU.

In the manner 2E, the first field includes a fourth subfield, a fifth subfield, and a sixth subfield.

The second length is indicated by the fourth subfield.

The second type is indicated by the fifth subfield.

The second number of symbols is indicated by the sixth subfield.

In the manner 2D, the first field does not indicate the transmission parameter of the second acknowledgement frame. In this case, the length, the Type of GI and LTF, and the number of LTF symbols corresponding to the second acknowledgement frame may be the same as the length, the Type of GI and LTF, and the number of LTF symbols corresponding to the second trigger frame. The second trigger frame is a trigger frame transmitted by the first access point device for triggering transmission of the second data frame.

For the manner 2E, the fourth subfield is used to indicate the second length. In some embodiments, the fourth subfield may be defined as an UL Length for PPDU carrying acknowledgement subfield.

The fifth subfield is used to indicate the second type. In some embodiments, the fifth subfield may be defined as a Type of GI and LTF for PPDU carrying acknowledgement subfield.

The sixth subfield is used to indicate the second number of symbols. In some embodiments, the sixth subfield may be defined as a Number of -LTF symbols for PPDU carrying acknowledgement subfield. The LTF may be HE/EHT/UHRLTF, the Number of -LTF symbols fort PPDU carrying acknowledgement subfield may be replaced with a Number of HE/EHT/UHR-LTF symbols for PPDU carrying acknowledgement subfield.

It is understood that in a case where the first field indicates the first transmission parameter and the second transmission parameter, any one of the manner 1A or manner 1B in the indication manner for the first transmission parameter may be combined with any one of the manner 2D or the manner 2E.

Taking the combination of the manner 1A and the manner 2D as an example, the first field includes a first subfield, a second subfield, and a third subfield. The first subfield is used to indicate the first length of the second data frame. In this case, the target transmission parameter indicated by the first field includes the first length, the first type, and the first symbol data of the second data frame, where the second length, the second type, and the second symbol data of the second acknowledgement frame are the same as the corresponding parameters of the second trigger frame, respectively.

Taking the combination of the manner 1A and the manner 2E as an example, the first field includes a first subfield, a second subfield, a third subfield, a fourth subfield, a fifth subfield, and a sixth subfield. In this case, the target transmission parameter indicated by the first field includes the first length, the first type, and the first number of symbols of the second data frame, and the second length, the second type, and the second number of symbols of the second acknowledgement frame.

Taking the combination of the manner 1B and the manner 2D as an example, the first field includes a first subfield, and the first subfield is used to indicate the first length of the second data frame. In this case, the target transmission parameter indicated by the first field includes the first length of the second data frame, where the first type of the second data frame is the same as the GI and TLF type of the second trigger frame, the first number of symbols of the second data frame is the same as the number of symbols in the TLF of the second trigger frame, and the second length, the second type, and the second symbol data of the second acknowledgement frame are the same as the corresponding parameters of the second trigger frame, respectively.

Taking the combination of the manner 1B and the manner 2E as an example, the first field includes a first subfield, a fourth subfield, a fifth subfield, and a sixth subfield. The first subfield is used to indicate the first length of the second data frame. In this case, the target transmission parameter indicated by the first field includes the first length of the second data frame, and the second length, the second type, and the second symbol data of the second acknowledgement frame, where the first type of the second data frame is the same as the GI and TLF typesof the second trigger frame, and the first number of symbols of the second data frame is the same as the number of symbols in the TLF of the second trigger frame.

In some embodiments, for the manner 2C or 2E, the first field further includes at least one of: a seventh subfield indicating a third number of symbols, where the seventh number of symbols is a number of symbols of a SIGNAL field in the third PPDU; or an eighth subfield indicating a modulation and coding scheme of the SIGNAL field.

In some embodiments, the first frame includes at least one of: a multi-AP coordinated transmission trigger frame; or a MU-RTS TXS frame.

In some embodiments, if the first frame is the multi-AP coordinated transmission trigger frame, the first field is located in one of: a trigger dependent common information subfield in a common information field; or a trigger dependent user information subfield in a special user information field.

In the embodiment of the disclosure, the first transmission information and/or the second transmission information indicated by the first field belong to the common information, and the first field is located in the Common Info field or the Special User Info field indicating the common information.

If the first field is located in the Common Info field, the first field is located in the Trigger Dependent Common Info subfield in the Common Info field.

If the first field is located in the Special User Info field, the first field is located in the Trigger Dependent User Info subfield in the Special User Info field.

In some embodiments, if the first frame is a multi-user request to send transmission state trigger frame, the first field is located in a special user information field, and a value of an AID in the special user information field is a set value.

The multi-user request to send transmission state trigger frame is used for sharing a transmission opportunity contended by the second access point device to one or more access point devices (including the first access point device) participating in the multi-AP coordinated transmission.

If the first field is located in the multi-user request to send transmission state trigger frame, the first field is a Special User Info field, and the value of the AID in the AID field in the Special User Info field is a set value, indicating that the information indicated by the first field is applicable to the access point device participating in the coordination.

In some embodiments, the value of AID is one of [1, 2006] or [2008, 2044].

In some embodiments, the first transmission parameter includes a first RU or MRU determined by a second field of the first frame, and the first RU or MRU is an RU or MRU used in transmission of the first target frame.

It is understood that in a case where the first target frame is the first acknowledgement frame, the first acknowledgement frame may have a corresponding first RU or MRU.

When the coordinated mode is the joint transmission or the coordinated beamforming, the first acknowledgement frame may have a corresponding first RU, so that when multiple non-access point devices transmit the first acknowledgement frame to associated access point devices, different non-access point devices use different first RUs to transmit the first acknowledgement frames.

In some embodiments, the first RU or MRU is: an RU or an MRU indicated by the second field; or an RU or an MRU allocated by the first access point device to the first non-access point device based on an RU or an MRU indicated by the second field.

It can be understood that for the RU or the MRU indicated by the second field, the second access point device directly allocates the RU or the MRU to each STA through the second field. In this case, the second field is for the STA.

If the first access point device allocates the RU or MRU to the first non-access point device according to the RU or MRU indicated by the second field, the second access point device allocates the RU or MRU to the first access point device in advance through the second field, and the first access point device determines the RU or MRU allocated to each STA according to the RU or MRU indicated by the second access point device. In this case, the second field is for the STA of the first access point device.

In the embodiment of the disclosure, the first frame may include one or more second fields, and different second fields are for different STAs or different shared APs.

In some embodiments, the second transmission parameter includes a second RU or MRU determined by a second field of the first frame, the second RU or MRU is an RU or MRU used in transmission of the second target frame.

The second target transmission frame may be a first trigger frame or a second acknowledgement frame.

In the embodiment of the disclosure, the first acknowledgement frame may have a corresponding first RU or MRU, and in this case, the first data frame may or may not carry the trigger frame.

When the first data frame does not carry the trigger frame (i.e., there is the first trigger frame), the first trigger frame has a corresponding second RU or MRU.

In the embodiment of the disclosure, the second acknowledgement frame may have a corresponding second RU or MRU.

In some embodiments, the second RU or the MRU is an RU or an MRU indicated by the second field.

The second field may be understood as an RU Allocation field.

In some embodiments, the second field is used to indicate an RU or an MRU in conjunction with at least one of: a bandwidth subfield in a common information field of a multiple access point coordinated transmission trigger frame; a bandwidth subfield extension in a special user information field of a multiple access point coordinated transmission trigger frame; or a PS160 subfield in a variant user information field of a multiple access point coordinated transmission trigger frame.

The bandwidth subfield (i.e., DL BW subfield) and the bandwidth subfield extension (DL BW Extension subfield) in the common information field of the multi-access point coordinated transmission trigger frame jointly indicate the bandwidth of the requested PPDU.

In the embodiment of the disclosure, since the second field is used for allocating the RU or MRU, the second field may also be defined as an RU allocation subfield. RU allocation subfield + DL BW subfield + DL BW Extension subfield+PS160 subfield jointly indicates a size and position of the RU requested by each AP, and the first RU or MRU is jointly indicated by RU allocation subfield + DL BW subfield + DL BW Extension subfield + PS160 subfield.

In an example, the shared AP allocates a respective RU or MRU to each shared AP participating in the coordination in advance through multiple second fields in the first frame, the shared AP uses these RUs or MRUs to transmit the trigger frames, and the shared AP allocates the RU allocated by the sharing AP to its associated STA.

In an example, the BA frame is transmitted by the shared AP, and the sharing AP indicates the RU or MRU for the shared AP to transmit the PPDU carrying the BA frame in advance.

In some embodiments, the second field is located in a variable user information field of the first frame.

If the first frame is a multi-AP coordinated transmission trigger frame, the second field is located in the UHR variant User Info subfield in the multi-AP coordinated transmission trigger frame.

If the first frame is the MU-RTS TXS frame, the second field is located in the UHR variant User Info subfield of the MU-RTS TXS frame.

In the embodiment of the disclosure, the first frame may include the first field, and the first transmission data indicated by the first field is used to participate in scheduling the first target frames transmitted between multiple access point devices and non-access point devices, so that the first target frames between different access point devices and non-access point devices are synchronized or orthogonal in frequency domain.

If the first field indicates second transmission data, the second transmission data is used for scheduling second target frames transmitted between multiple access point devices and non-access point devices, so that the second target frames between different access point devices and non-access point devices are synchronized or orthogonal in frequency domain.

For different access point devices or non-access point devices, transmissions of the first target frames or the second target frames are performed using the same first transmission parameter or the same second transmission parameter.

In the embodiment of the disclosure, the first frame may include multiple second fields, and different second fields are used to indicate RUs or MRUs for different access point devices or non-access point devices. If the second field indicates an RU or MRU of the first access point device, the RU or MRU for a non-access point device associated with the first access point device may be allocated by this access point device.

In the embodiment of the disclosure, the presence of the first field and the second field in the first frame may be independent.

In the embodiment of the disclosure, the indication to the first transmission parameter and the second transmission parameter by the first field may be independent. In an example, the first field indicates the first transmission parameter, and in an example, the first field indicates the second transmission parameter. In an example, the first field indicates the first transmission parameter and the second transmission parameter.

Similar to the first field, the determination of the first RU and the second RU are independent based on the second field.

In some embodiments, the first frame includes a third field for indicating a transmission parameter of one of: a first acknowledgement frame in a case where a first data frame transmitted by the first access point device carries a trigger frame, where the first acknowledgement frame is used for acknowledgement of the first data frame; a first acknowledgement frame and a first trigger frame in a case where a first data frame does not carry a trigger frame, where the first trigger frame is used for triggering the first acknowledgement frame; or a second data frame received by the first access point device.

The third field may be understood as a general field indicating at least one of the following transmission parameters, i.e., indicating at least one of the following transmission parameters of different frames in different coordination modes: a length of the PPDU; a Type of GI and LTF in the PPDU; or a Number of LTF symbols in the PPDU.

In the DL Coordinated OFDMA or Joint Transmission or coordinated beamforming coordination mode, the third field may indicate a transmission parameter of the first acknowledgement frame.

In the DL Coordinated OFDMA or Joint Transmission or coordinated beamforming coordination mode, the third field may indicate transmission parameters of the first acknowledgement frame and the first trigger frame.

In the UL Coordinated OFDMA or coordinated UL MU-MIMO coordinated mode, the third field may indicate a transmission parameter of the second data frame. In this case, the transmission parameter of the second acknowledgement frame is consistent with the corresponding transmission parameter of the second trigger frame.

In some embodiments, if the third field is used to indicate transmission parameters of the first acknowledgement frame and the first trigger frame, the third field is used to indicate a length of a PPDU carrying the first trigger frame, the first trigger frame is carried on a non-HT PPDU or a non-HT duplicated PPDU.

In this case, the PPDU carrying the first trigger frame may not include the VHT/HE/EHT/UHR-LTF field, and the third field only needs to indicate the length of the PPDU carrying the first trigger frame.

In some embodiments, if the third field is used for indicating the transmission parameter of the second data frame, a transmission parameter of the second acknowledgement frame is the same as a transmission parameter of the second trigger frame, the second trigger frame is used for triggering transmission of the second data frame, and the second acknowledgement frame is used for acknowledgement of the second data frame.

In some embodiments, the third field includes: a ninth subfield for indicating a length of a fifth PPDU; a tenth subfield for indicating a type of an LTF in the fifth PPDU; and an eleventh subfield for indicating a number of symbols of the LTF in the fifth PPDU.

Here, the fifth PPDU includes one of: a PPDU carrying the first acknowledgement frame; a PPDU carrying the first acknowledgement frame and a PPDU carrying the first trigger frame; or a PPDU carrying the second data frame.

In some embodiments, the third field may be located at one of: Trigger Dependent Common Info subfield of the multi-AP coordinated transmission trigger frame; or Trigger Dependent User Info subfield in the Special User Info field.

In some embodiments, the first frame further includes a fourth field for determining a third RU or MRU, and the third RU or the MRU is used when transmitting one of: a first acknowledgement frame in a case where the first data frame carries a trigger frame, where the first acknowledgement frame is used for acknowledgement of the first data frame; a first acknowledgement frame and a first trigger frame in a case where the first data frame does not carry a trigger frame, where the first trigger frame is used for triggering the first acknowledgement frame; or a second data frame, where the second data frame is a data frame transmitted by the first non-access point device to the first access point device.

In the Joint Transmission or coordinated beamforming coordination mode, the fourth field may indicate the RU or MRU of the first acknowledgement frame when the first data frame carries the trigger frame.

In the Joint Transmission or coordinated beamforming coordination mode, the fourth field may indicate the RU of the first acknowledgement frame and the RU or MRU of the first trigger frame when the first data frame does not carry the trigger frame.

In the coordinated UL MU-MIMO coordinated mode, the fourth field may indicate the RU or the MRU of the second data frame.

In some embodiments, the fourth field is used to indicate an RU or an MRU in conjunction with at least one of: a bandwidth subfield in a common information field of a multiple access point coordinated transmission trigger frame; a bandwidth subfield extension in a special user information field of a multiple access point coordinated transmission trigger frame; or a PS160 subfield in a variant user information field of a multiple access point coordinated transmission trigger frame.

In the embodiment of the disclosure, the fourth field may be defined as an UL acknowledgement RU allocation information field.

In some embodiments, the fourth field is located in the UHR variant User Info subfield in the multi-AP coordinated transmission trigger frame.

In the embodiment of the disclosure, the first frame may include a third field, and the transmission information indicated by the third field is applied to different frames for different coordination modes, but when multiple access point devices or non-access point devices participating in the coordination transmit corresponding frames, the transmission information indicated by the third field may be used to schedule these frames, so that the first target frames between different access point devices or non-access point devices are synchronized or orthogonal in frequency domain.

In the embodiment of the disclosure, the first frame may include multiple fourth fields, and different fourth fields are used to indicate RUs or MRUs for different access point devices or non-access point devices. In different coordination modes, the RU or MRU indicated by the fourth field is used to schedule different frames.

Hereinafter, the method for transmission control provided by the embodiment of the disclosure will be further described in conjunction with different coordination modes.

The embodiment of the disclosure designs the signaling indication of each PPDU transmission parameter for the following four coordination modes of the multi-AP coordinated transmission: a DL C-OFDMA mode, a DL joint transmission mode, an UL C-OFDMA mode, and an UL coordinated MU-MIMO. The designed signaling indication of each PPDU transmission parameter includes: a PPDU length, a GI and HE/EHT/UHR-LTF type, and the number of HE/EHT/UHR-LTF symbols, to ensure the frequency domain symbol orthogonality of each PPDU and the synchronization among APs during the entire transmission. Further, for the DL joint transmission mode and the UL coordinated MU-MIMO mode in the multi-AP coordinated transmission, The signaling to indicate the frequency-domain RUs for the transmission of the acknowledgement sequence by the AP and non-AP STA is designed to avoid inter-AP conflicts. The acknowledgement sequence includes one of: an acknowledgment, a Trigger Frame and acknowledgment.

Here, the structure of the PPDU is explained using the Ultra-High Reliability (UHR) PPDU as an example.

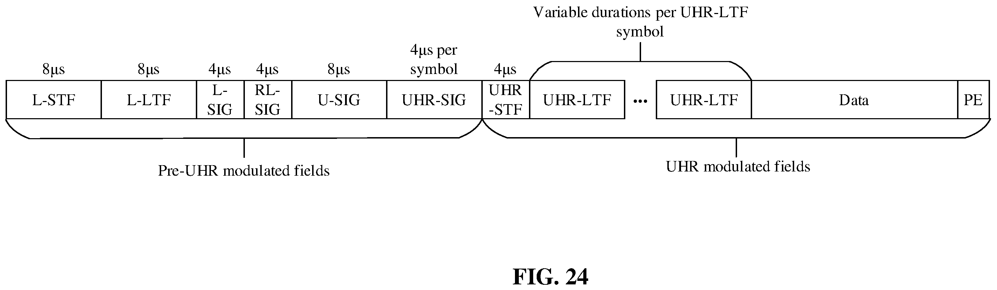

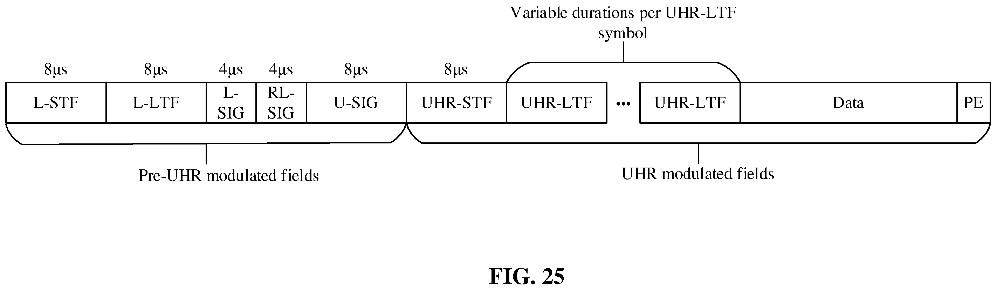

The UHR PPDU has two formats: an UHR MU PPDU and an UHR TB PPDU. If the PPDU is not a response to the Trigger frame, the UHR MU PPDU format as illustrated in FIG. 24 is used for transmission to one or more users. In the UHR MU PPDU, an L-STF field, an L-LTF field, an L-SIG field, an RL-SIG field, an U-SIG field, and an UHR-SIG field are referred to as Pre-UHR modulation fields, while an UHR-STF field, an UHR-LTF field, a Data field, and a PE field are referred to as UHR modulation fields. The UHR TB PPDU format as illustrated in FIG. 25 is used in response to transmission of a Trigger frame from an AP. In the UHR MU PPDU, an L-STF field, an L-LTF field, an L-SIG field, an RL-SIG field, and an U-SIG field are referred to as Pre-UHR modulation fields, while an UHR-STF field, an UHR-LTF field, a Data field, and a PE field are referred to as UHR modulation fields. The duration of the UHR-STF field in the UHR TB PPDU is twice that of the UHR-STF field in the UHR MU PPDU. For the UHR PPDU, each UHR-LTF symbol has the same GI duration as each data symbol, the GI duration may be 0.8µs, 1.6µs, or 3.2µs, respectively. The UHR-LTF field includes three types: 1x UHR-LTF, 2x UHR-LTF, and 4x UHR-LTF. The duration for each 1x UHR-LTF, 2x UHR-LTF, or 4x UHR-LTF symbol without GI is 3.2µs, 6.4µs, or 12.8µs, respectively. The data symbol without GI is 12.8µs.

Hereinafter, methods for transmission control in the downlink transmission, the uplink transmission, and the common signaling scenarios will be described, respectively.

### DL Transmission

For the multi-AP DL transmission, related parameters indicating each AP to request the PPDU for transmission of acknowledgement sequences have been designed for the DL coordinated OFDMA and Joint Transmission, ensuring orthogonality in the frequency-domain symbols and synchronization among APs.

### For the coordination mode of DL Coordinated OFDMA

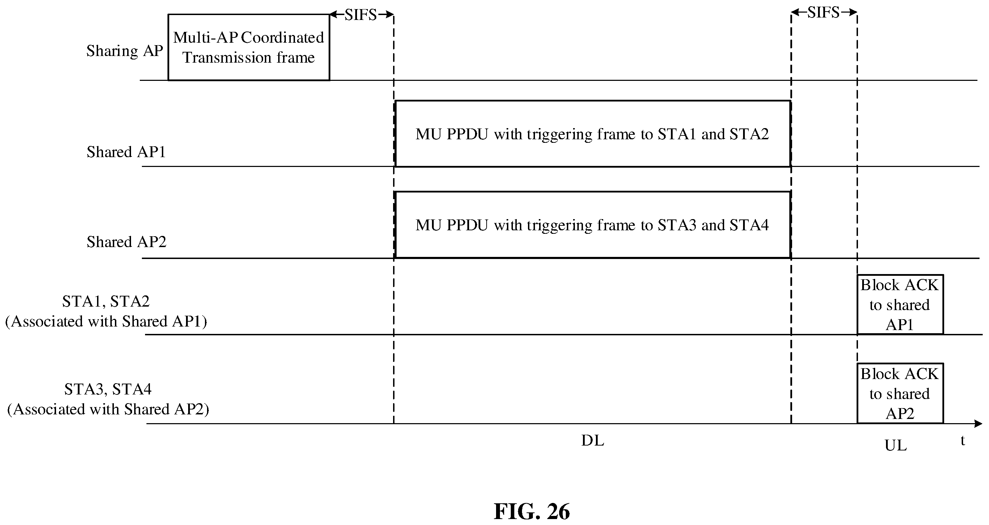

In an embodiment, when performing the DL Coordinated OFDMA transmission, if a non-AP STA receives a DL MU PPDU containing a QoS data frame or QoS Null frame with the HETP Ack ack policy, an MU-BAR Trigger frame or GCR MU-BAR Trigger frame, or a management frame requesting acknowledgment, the non-AP STA shall transmit an UL immediate response based on the scheduling information in the trigger frame or TRS control subfield. As illustrated in FIG. 26.

Herein, the scheduling information in the trigger frame or the TRS control subfield is indicated by the sharing AP using the first field in the first frame. For example, the first field is an UL acknowledgement information field, and its subfields may be the following two options, as illustrated in the first embodiment and the second embodiment, respectively.

For the position of the first field, if the first frame is the multi-AP coordinated transmission trigger frame, the first field is located in the Trigger Dependent Common Info subfield or the Trigger Dependent User Info subfield of the multi-AP coordinated transmission trigger frame; if the first frame is the MU-RTS TXS frame, the first field is located in the special user info field of the frame and the AID12 subfield of the MU-RTS TXS frame is equal to one of [1, 2006] or [2008, 2044] with a total of N bits. For example, N = 40, except for the first field, the remaining bits are reserved fields.

### First embodiment

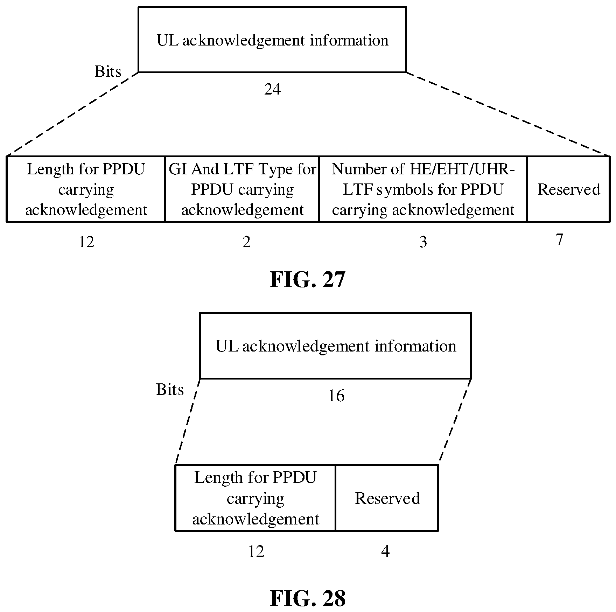

As illustrated in FIG. 27, the subfield of the UL acknowledgement information includes: an UL Length for acknowledgement subfield, a Type of GI and LTF for acknowledgement subfield and a Number of HE/EHT/UHR-LTF symbols for acknowledgement subfield, indicating the length, the Type of GI and LTF, and the number of symbols of HE/EHT/UHR-LTF of the PPDU carrying the BlockAck frame, respectively.

For the Type of GI and LTF for acknowledgement subfield: a value of 0 represents 1 × HE/EHT/UHR-LTF + 1.6µs GI; a value of 1 represents 2 × HE/EHT/UHR-LTF + 1.6µs GI; a value of 2 represents 4 × HE/EHT/UHR-LTF + 3.2µs GI; and a value of 3 indicates reserved.

For the Number of HE/EHT/UHR-LTF symbols for acknowledgement subfield: a value of 0 represents one HE-LTF or EHT-LTF or UHR-LTF symbol; a value of 1 represents two HE-LTF or EHT-LTF or UHR-LTF symbols; a value of 2 represents four HE-LTF or EHT-LTF or UHR-LTF symbols; a value of 3 represents six HE-LTF or EHT-LTF or UHR-LTF symbols; a value of 4 represents eight HE-LTF or EHT-LTF or UHR-LTF symbols; and values of 5-7 indicate reserved.

It should be noted that the meanings of the Type of GI and LTF and the Number of HE/EHT/UHR-LTF symbols appearing later are the same, and will not be repeated later.

### Second embodiment

As illustrated in FIG. 28, the subfield of the UL acknowledgement information includes: an UL Length for acknowledgement subfield, which indicates the length of the PPDU carrying the BlockAck frame. The Type of GI and LTF and the number of symbols of HE/EHT/UHR-LTF are consistent with that of the DL MU PPDU received by the non-AP STA.

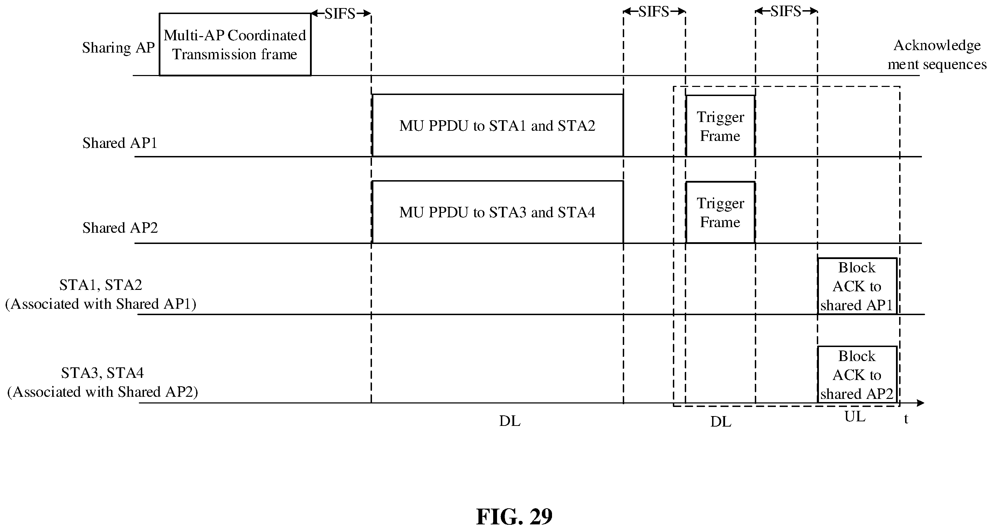

In another embodiment, each AP participating in the multi-AP transmission requests an acknowledgement frame from multiple non-AP STAs using an MU-BAR Trigger frame or a GCR MU-BAR Trigger frame, before which each AP participating in the multi-AP transmission transmits a QoS data frame with a Block Ack ack policy to these non-AP STAs or does not receive immediate acknowledgment frames from these non-AP STAs after transmitting QoS data frames with a HETP Ack ack policy in the MU PPDU. As illustrated in FIG. 29.

The transmission parameter of the PPDU carrying the trigger frame for requesting an acknowledgement and the transmission parameter of the PPDU carrying the acknowledgement frame are indicated by the sharing AP using the first field in the first frame. For example, the first field is the UL acknowledgement information, and its sub-fields may be the following four options, as illustrated in the third embodiment to the sixth embodiment, respectively.

### Third embodiment

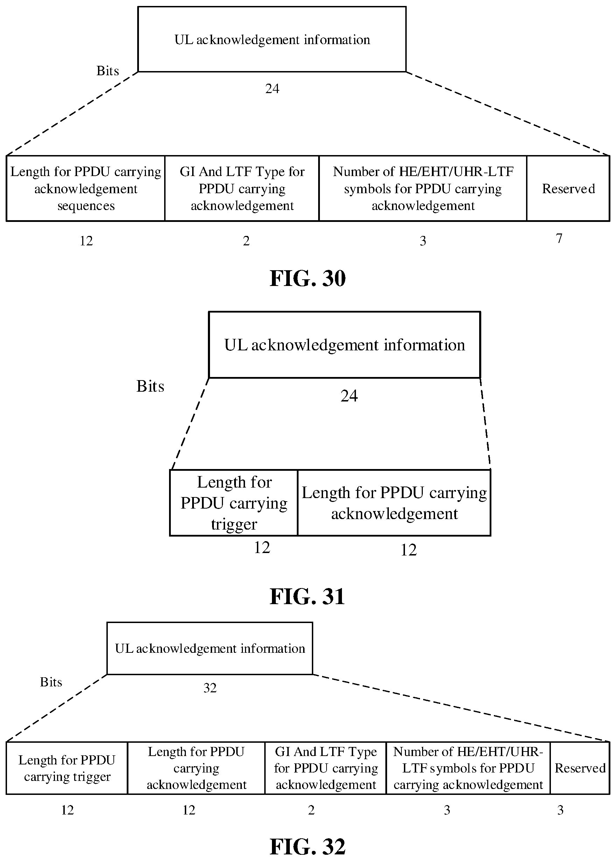

The subfield contents of the UL acknowledgement information are illustrated in FIG. 30.

The Length for acknowledgement sequences subfield indicates the length of the PPDU carrying the trigger frame for acknowledgement and the length of the PPDU carrying the BlockAck frame.

The Type of GI and LTF for PPDU carrying acknowledgement subfield indicates the Type of GI and LTF of the PPDU carrying the BlockAck frame.

The Number of HE/EHT/UHR-LTF symbols for PPDU carrying acknowledgement subfield indicates the number of symbols of the HE/EHT/UHR-LTF of the PPDU carrying the BlockAck frame.

That is, the two PPDUs in the acknowledgement sequences use the same length, and define the Type of GI and LTF and the number of symbols of the HE/EHT/UHR-LTF of the PPDU carrying the BlockAck frame. The PPDU carrying the trigger frame for requesting the acknowledgement is a non-HT PPDU or a non-HT duplicated PPDU. The PPDU carrying the BlockAck frame is an HE TB PPDU, an EHT TB PPDU, or an UHR TB PPDU.

### Fourth embodiment

The subfield contents of the UL acknowledgement information are illustrated in FIG. 31.

The Length for PPDU carrying trigger subfield indicates the length of the PPDU carrying the trigger frame for requesting an acknowledgement.

The Length for PPDU carrying acknowledgement subfield indicates the length of the PPDU carrying the BlockAck frame.

That is, the two PPDUs in the acknowledgement sequences use different lengths. The PPDU carrying the trigger frame for requesting the acknowledgement is a non-HT PPDU or a non-HT duplicated PPDU. The PPDU carrying the BlockAck frame is a HE TB PPDU or an EHT TB PPDU or an UHR TB PPDU, the Type of GI and LTF, the number of symbols of HE/EHT/UHR-LTF is consistent with that in the DL MU PPDU (second one frame).

### Fifth embodiment

The subfield contents of the UL acknowledgement information are illustrated in FIG. 32.

The Length for PPDU carrying trigger subfield indicates the length of the PPDU carrying the trigger frame for requesting an acknowledgement.

The Length for PPDU carrying acknowledgement subfield indicates the length of the PPDU carrying the BlockAck frame.

The Type of GI and LTF for acknowledgement sequences subfield indicates the Type of GI and LTF of the PPDU carrying the BlockAck frame.

The Number of HE/EHT/UHR-LTF symbols for acknowledgement sequences subfield indicates the number of symbols of the HE/EHT/UHR-LTF of the PPDU carrying the BlockAck frame.

That is, the two PPDUs in the acknowledgement sequences use different lengths, and define the Type of GI and LTF and the number of symbols of the HE/EHT/UHR-LTF of the PPDU carrying the BlockAck frame. The PPDU carrying the trigger frame for requesting the acknowledgement is a non-HT PPDU or a non-HT duplicated PPDU. The PPDU carrying the BlockAck frame is an HE TB PPDU, an EHT TB PPDU, or an UHR TB PPDU.

### Sixth embodiment

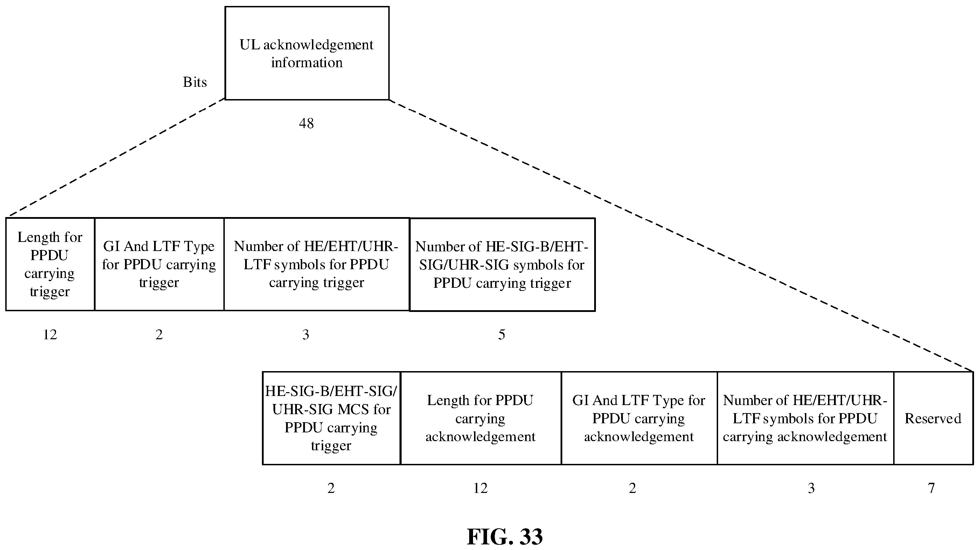

The subfield contents of the UL acknowledgement information are illustrated in FIG. 33.

The Length for PPDU carrying trigger subfield indicates the length of the PPDU carrying the trigger frame for requesting an acknowledgement.

The Type of GI and LTF for PPDU carrying trigger subfield indicates the Type of GI and LTF of the PPDU carrying the trigger frame for requesting the acknowledgement.

The Number of HE/EHT/UHR-LTF symbols for PPDU carrying trigger subfield indicates the number of symbols of the HE/EHT/UHR-LTF of the PPDU carrying the trigger frame for requesting the acknowledgement.

The Number of HE-SIG-B/EHT-SIG/UHR-SIG symbols for PPDU carrying trigger subfield indicates the number of symbols of the HE-SIG-B/EHT-SIG/UHR-SIG of the PPDU carrying the trigger frame for requesting the acknowledgement. The value of the subfield is set to a value of the number of HE-SIG-B/EHT-SIG/UHR-SIG symbols minus 1.

The HE-SIG-B/EHT-SIG/UHR-SIG MCS for PPDU carrying trigger subfield indicates the HE-SIG-B/EHT-SIG/UHR-SIG MCS of the PPDU carrying the trigger frame for requesting the acknowledgement, a value of 0 represents BPSK with a code rate of 1/2, a value of 1 represents QPSK with a code rate of 1/2, a value of 2 indicates 16-QAM with a code rate of 1/2, and a value of 3 represents BPSK-DCM with a code rate of 1/2.

The Length for PPDU carrying acknowledgement subfield indicates the length of the PPDU carrying the acknowledgement frame.

The Type of GI and LTF for PPDU carrying acknowledgement subfield indicates the Type of GI and LTF of the PPDU carrying the acknowledgement frame.

The Number of HE/EHT/UHR-LTF symbols for PPDU carrying acknowledgement subfield indicates the number of symbols of the HE/EHT/UHR-LTF of the PPDU carrying the acknowledgement frame.

That is, two PPDUs in the acknowledgement sequences use different lengths, different Type of GI and LTFs, and different numbers of symbols of HE/EHT/UHR-LTF. The PPDU carrying the trigger frame for requesting the acknowledgement is a non-HT PPDU, a non-HT duplicated PPDU, a HE MU PPDU, an EHT MU PPDU, or an UHR MU PPDU. The PPDU carrying the BlockAck frame is an HE TB PPDU, an EHT TB PPDU, or an UHR TB PPDU.

### For the coordination mode of the Joint Transmission

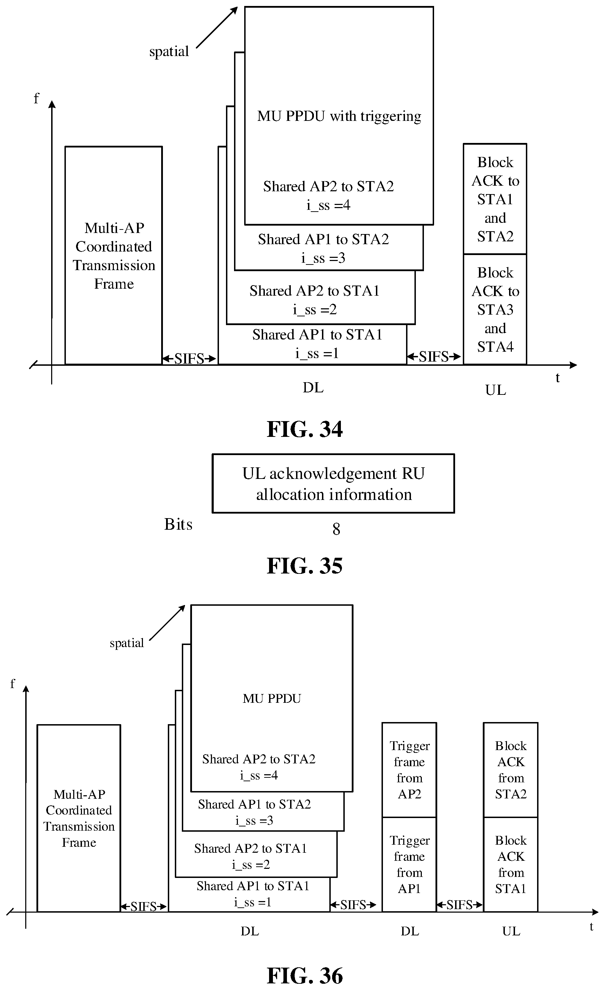

In an embodiment, when performing the DL joint transmission, if a non-AP STA receives a DL MU PPDU containing a QoS data frame or QoS Null frame with the HETP Ack ack policy, an MU-BAR Trigger frame or GCR MU-BAR Trigger frame, or a management frame requesting acknowledgment, the non-AP STA shall transmit an UL immediate response based on the scheduling information in the trigger frame or TRS control subfield. Different SSs are used for PPDUs transmitted between different Shared APs and different STAs. As illustrated in FIG. 34, an SS having an identification i_SS of 1 is used for the PPDU from the Shared AP1 to the STA1, an SS having an identification i_SS of 2 is used for the PPDU from the Shared AP2 to the STA1, an SS having an identification i_SS of 3 is used for the PPDU from the Shared AP2 to the STA1, and an SS having an identification i_SS of 4 is used for the PPDU from the Shared AP2 to the STA2.

Herein, the scheduling information in the trigger frame or the TRS control subfield is indicated by the sharing AP using the first field and the second field in the first frame. For example, the first field is an UL acknowledgement information field, and its sub-fields may be two options as illustrated in the first embodiment and the second embodiment, respectively. The second field is an UL acknowledgement RU allocation information field as illustrated in the seventh embodiment.

For the position of the first field, if the first frame is the multi-AP coordinated transmission trigger frame, the first field is located in a Trigger Dependent Common Info subfield in the multi-AP coordinated transmission trigger frame or a Trigger Dependent User Info subfield in the Special User Info field; if the first frame is the MU-RTS TXS frame, the first field is located in the special user info field of the frame and the AID12 subfield of the MU-RTS TXS frame is equal to one of [1, 2006] or [2008, 2044] with a total of N bits. For example, N = 40, except for the first field, the remaining bits are reserved fields.

For the position of the second field, if the first frame is a multi-AP coordinated transmission trigger frame, the second field is located in the UHR variant User Info subfield in the multi-AP coordinated transmission trigger frame; if the first frame is the MU-RTS TXS frame, the second field is located in the UHR variant User Info subfield of the MU-RTS TXS frame.

### Seventh embodiment

The UL acknowledgement RU allocation information as illustrated in FIG. 35, the DL BW subfield in the Common Info field of the multi-AP coordinated transmission trigger frame, the DL BW Extension subfield in the Special User Info field, and the PS160 subfield in the UHR variant User Info field jointly indicate the size and location of the frequency-domain RU/MRU for each AP (identified by the AID12 subfield and participating in the multi-AP transmission) to request the acknowledgement sequence. Each AP participating in the multi-AP transmission independently allocates the resource to the non-AP STA to transmit the PPDU carrying the acknowledgement frame. Alternatively, the above subfields jointly indicate the size and location of the frequency-domain RU/MRU for each AP (identified by the VAID12 subfield and participating in the multi-AP transmission) to transmit the PPDU carrying the acknowledgement frame.

In another embodiment, as illustrated in FIG. 36, each AP participating in the multi-AP transmission requests an acknowledgement frame from multiple non-AP STAs using an MU-BAR Trigger frame or a GCR MU-BAR Trigger frame, before which each AP participating in the multi-AP transmission transmits a QoS data frame with a Block Ack ack policy to these non-AP STAs or does not receive immediate acknowledgment frames from these non-AP STAs after transmitting QoS data frames with a HETP Ack ack policy in the MU PPDU.

The transmission parameters for the trigger frame requesting an acknowledgement and the PPDU carrying the requested acknowledgement frame are indicated by the sharing AP using the first field and the second field in the first frame. For example, the first field is the UL acknowledgement information, whose subfield may correspond to four options as illustrated from the third embodiment to the sixth embodiment. The second field is the UL acknowledgement RU allocation information, as illustrated in the eighth embodiment.

### Eighth embodiment

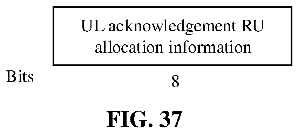

The UL acknowledgement RU allocation information as illustrated in FIG. 37, the DL BW subfield in the Common Info field of the multi-AP coordinated transmission trigger frame, the DL BW Extension subfield in the Special User Info field, and the PS160 subfield in the UHR variant User Info field jointly indicate the size and location of the frequency-domain RU/MRU for each AP (identified by the AID12 subfield and participating in the multi-AP transmission) to transmit a PPDU, which carries the trigger frame requesting the acknowledgement. Further, the AP participating in the multi-AP transmission determines the frequency-domain RU/MRU for the non-AP STA to transmit the PPDU carrying the acknowledgement frame based on the frequency domain resource.

### UL Transmission

For the multi-AP UL transmission, related parameters indicating each non-AP STA to transmit the TB PPDU and transmit the PPDU for acknowledgement have been designed for the UL coordinated OFDMA and coordinated UL MU-MIMO, ensuring orthogonality in the frequency-domain symbols and synchronization among APs.

### For the coordination mode of UL Coordinated OFDMA

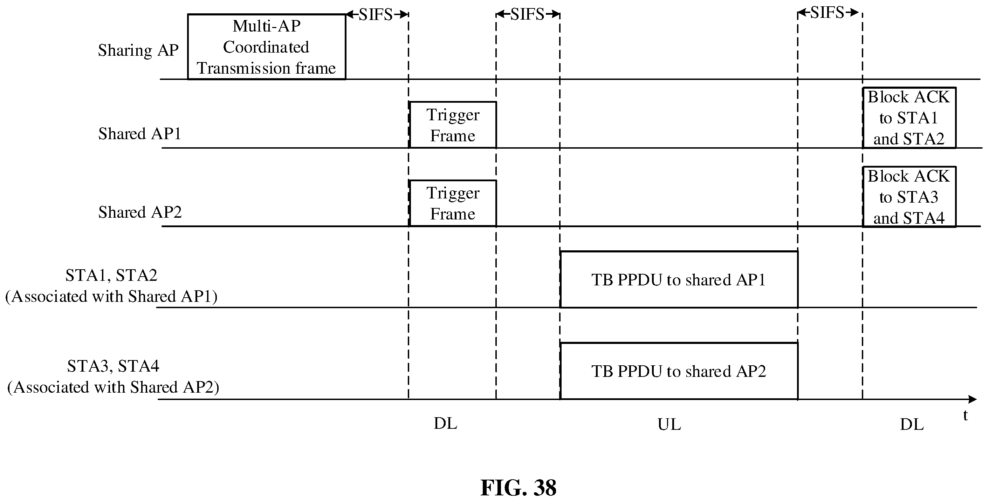

As illustrated in FIG. 38, when performing the UL multi-AP coordinated OFDMA transmission, the AP receives TB PPDUs from multiple STAs and requires an immediate acknowledgment (e.g., a QoS data frame carrying a Normal Ack or an Implicit BAR ack policy, a management frame of a non-Action No Ack), and should transmit the immediate acknowledgment in the form of a Single User (SU) PPDU or an MU PPDU. The immediate acknowledgment may be an Ack frame, a Compressed BlockAck frame, or a Multi-STA BlockAck frame.

There are two schemes for the transmission parameter (the PPDU length, the Type of GI and LTF, the number of symbols of HE/EHT/UHR-LTF) of the TB PPDU and the transmission parameter of the PPDU carrying the acknowledgement frame.

### First scheme (indicating the third one frame, the fourth one frame and the second one frame have the same length)

The sharing AP only indicates the transmission parameter of the TB PPDU using the first field in the first frame, and the transmission parameter of the PPDU carrying the acknowledgement frame are the same as the transmission parameter of the PPDU carrying the trigger frame. For example, the first field is the UL TB PPDU information, and its subfields may have two options, as illustrated in the first embodiment and second embodiment, respectively, and the "PPDU carrying acknowledgement" subfield is replaced with the "UL TB PPDU".

### Second scheme 2 (indicating the third one frame and fourth one frame)

The sharing AP indicates the transmission parameter of the TB PPDU and the transmission parameter of the PPDU carrying the acknowledgement using the first field in the first frame. For example, the first field is the UL TB PPDU and Acknowledgement PPDU Information, as illustrated in the sixth embodiment, and its subfields are replaced as follows: the "PPDU carrying trigger" is replaced with the "PPDU carrying acknowledgement"; and the "PPDU carrying acknowledgement" is replaced with the "UL TB PPDU".

### For the coordinated UL MU-MIMO

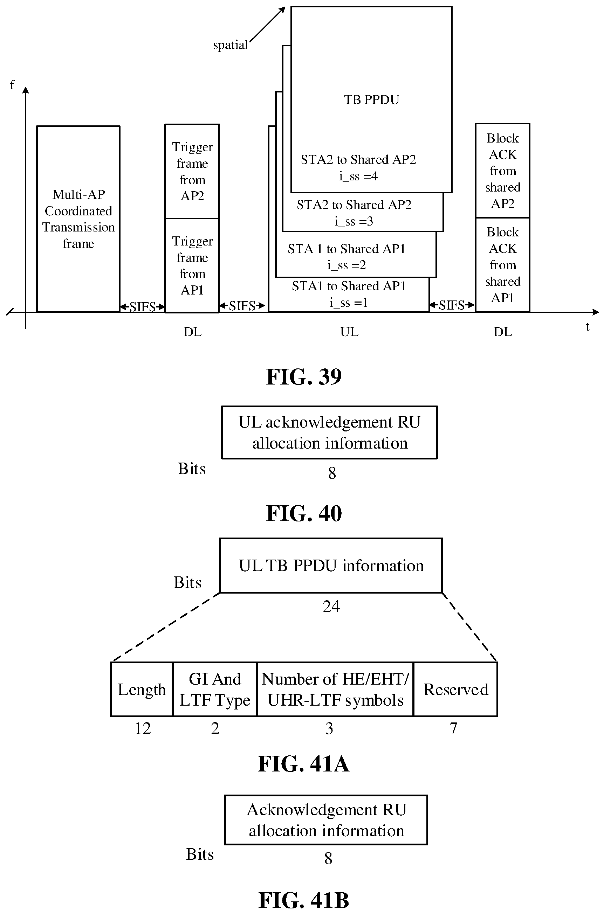

As illustrated in FIG. 39, when performing the coordinated UL MU-MIMO transmission, the AP receives TB PPDUs from multiple STAs and requires an immediate acknowledgment (e.g., a QoS data frame carrying a Normal Ack or an Implicit BAR ack policy, a management frame of a non-Action No Ack), and should transmit the immediate acknowledgment in the form of a Single User (SU) PPDU or an MU PPDU. The immediate acknowledgment may be an Ack frame, a Compressed BlockAck frame, or a Multi-STA BlockAck frame.

There are two schemes (which are the same as the first scheme and second scheme in Section 3.3.1) for indication of the transmission parameters (the PPDU length, the Type of GI and LTF, the number of symbols of HE/EHT/UHR-LTF) of the TB PPDU and the PPDU carrying the acknowledgement. The frequency domain resource RU for transmission of PPDU carrying the acknowledgement is indicated by the sharing AP using the second field in the first frame. For example, the second field is the DL acknowledgement RU allocation information, as illustrated in the ninth embodiment.

### Ninth embodiment

The DL acknowledgement RU allocation information as illustrated in FIG. 40, the DL BW subfield in the Common Info field of the multi-AP coordinated transmission trigger frame, the DL BW Extension subfield in the Special User Info field, and the PS160 subfield in the UHR variant User Info field jointly indicate the size and location of the frequency-domain RU/MRU for each AP (identified by the AID12 subfield and participating in the multi-AP transmission) to transmit the PPDU carrying the acknowledgement.

### Common signaling indication

This common signaling indication is applicable to the following four coordinated modes, in which signaling indication for each PPDU transmission parameter is designed: the DL C-OFDMA, the DL joint transmission, the UL C-OFDMA, and the UL coordinated MU-MIMO.

### UL TB PPDU information Field

As illustrated in FIG. 41A, this field is located in the Trigger Dependent User Info subfield or the Trigger Dependent User Info subfield in the Special User Info field of the multi-AP coordinated transmission trigger frame.
(1) DL coordinated OFDMA transmission: in the case of transmission in the manner of FIG. 26, this field indicates the TB PPDU parameter for transmission of the third one frame; in the case of transmission in the manner of FIG. 2B, this field indicates the TB PPDU parameter for transmission of the fourth one frame, and also indicates the PPDU length for the third one frame, where the third one frame is a non-HT duplicate PPDU.
(2) DL joint transmission: in the case of transmission in the manner of FIG. 34, this field indicates the TB PPDU parameter for transmission of the third one frame; in the case of transmission in the manner of FIG. 36, this field indicates the TB PPDU parameter for transmission of the fourth one frame, and also indicates the PPDU length for the third one frame, where the third one frame is a non-HT duplicate PPDU.
(3) UL coordinated OFDMA transmission: in the case of transmission in the manner of FIG. 38, this field indicates the TB PPDU parameter for transmission of the third one frame, and the PPDU parameter for the fourth one frame is the same as that of the second one frame (the PPDU parameter for the second one frame can refer to the related parameter for the first one PPDU in the Multi-AP coordinated transmission Trigger frame).
(4) UL coordinated MU-MIMO transmission: in the case of transmission in the manner of FIG. 39, this field indicates that the TB PPDU parameters for transmission of the third one frame, and the PPDU parameter for the fourth one frame is the same as that of the second one frame (the PPDU parameter for the second one frame can refer to the related parameter for the first PPDU in the Multi-AP coordinated transmission Trigger frame).

### UL acknowledgement RU allocation information field

This field is located in the UHR variant User Info subfield of the multi-AP coordinated transmission trigger frame.
(5) DL joint transmission: in the case of transmission in the manner of FIG. 34, this field, the DL BW subfield of the Common Info field in the multi-AP coordinated transmission trigger frame, the DL BW Extension subfield in the Special User Info field, and the PS160 subfield in the UHR variant User Info field jointly indicates the frequency-domain RU/MRU for transmission of the TB PPDU of the third one frame. In the case of transmission in the manner of FIG. 36, this field, the DL BW subfield in the Common Info field of the multi-AP coordinated transmission trigger frame, the DL BW Extension subfield in the Special User Info field, and the PS160 subfield in the UHR variant User Info field jointly indicates the frequency-domain RU/MRU for transmission of the TB PPDU of the third one frame and fourth one frame.
(6) UL Coordinated MU-MIMO Transmission: in the case of transmission in the manner of FIG. 34, this field, the DL BW subfield in the Common Info field of the multi-AP coordinated transmission trigger frame, the DL BW Extension subfield in the Special User Info field, and the PS160 subfield in the UHR variant User Info field jointly indicates the frequency-domain RU/MRU for transmission of the TB PPDU of the third one frame and fourth one frame.

The format of the acknowledgement RU allocation information field may be as illustrated in FIG. 41B.

It should be noted that information or fields included in the frame format of the embodiments of the disclosure can be deleted, modified, or added according to actual needs, and different pieces of information and fields are independent of each other.

Preferred embodiments of the present disclosure have been described in detail with reference to the accompanying drawings, but the present disclosure is not limited to the specific details of the above embodiments. Within the scope of the technical conception of the present disclosure, various simple modifications can be made to the technical solutions of the present disclosure, and these simple modifications all fall within the scope of protection of the present disclosure. For example, various specific technical features described in the above specific embodiments may be combined in any suitable manner without conflict. Various possible combinations are not further described in the present disclosure to avoid unnecessary repetition. For another example, various different implementations of the present disclosure can also be combined arbitrarily, which should also be considered as the content disclosed by the present disclosure as long as they do not violate the conception of the present disclosure. For another example, various embodiments described in the present disclosure and/or the technical features in various embodiments can be arbitrarily combined with the related technologies without conflict, and the technical solutions obtained after the combination should also fall within the scope of protection of the present disclosure.

It should also be understood that in the various method embodiments of the present disclosure, the size of the serial numbers of the above-mentioned various processes do not indicate a sequence of execution. The sequence of execution of the processes should be determined by their functions and inherent logics, and should not constitute a limitation on the implementation process of the embodiments of the present disclosure. Further, in embodiments of the present disclosure, the terms "downlink", "uplink" and "sidelink" are used to indicate transmission directions of signals or data. The term "downlink" is used to denote that the transmission direction of the signals or the data is a first direction from a station to user equipment in a cell. The term "uplink" is used to denote that the transmission direction of the signals or the data is a second direction from the user equipment in the cell to the station. The term "sidelink" is used to denote that the transmission direction of the signals or the data is a third direction from first user equipment to second user equipment. For example, "downlink signal" means that the transmission direction of the signal is the first direction. In addition, in the embodiments of the present disclosure, the term "and/or" refers to only an association relationship for describing associated objects and represents that three relationships may exist. Specifically, A and/or B may represent three cases: i.e., only A exists, both A and B exist, and only B exists. Furthermore, character "/" in the disclosure usually represents that previous and next associated objects form an "or" relationship.

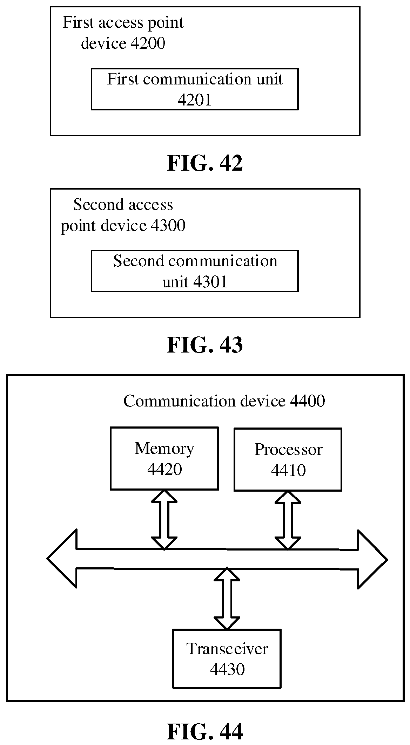

FIG. 42 is a diagram of a structural composition of the first access point device provided in the embodiment of the disclosure. As illustrated in FIG. 42, the first access point device 4200 includes a first communication unit 4201.

The first communication unit 4201 is configured to receive a first frame transmitted by a second access point device, where the first frame is used to indicate a target transmission parameter, the target transmission parameter is used for each of at least one access point device participating in a coordinated transmission to schedule transmission of at least one target frame, the at least one access point device includes a first non-access point device, the target frame is located after a first one frame transmitted between the first access point device and the first non-access point device.

It is understood that the first access point device further includes a processing unit, configured to parse the received first frame to obtain the target transmission parameter indicated by the first frame.

In some embodiments, the second access point device is an access point device that initiates a multi-access point device coordination.

In some embodiments, the first frame includes at least one of: a multiple access point coordinated transmission trigger frame; or a multi-user request to send-triggered transmission opportunity sharing frame.

In some embodiments, the target transmission parameter includes a first transmission parameter for scheduling transmission of the first target frame, and the first target frame is transmitted by the first non-access point device to the first access point device.

In some embodiments, the first target frame includes at least one of: a first acknowledgement frame for acknowledgement of a first data frame transmitted by the first access point device, where the first data frame carries or does not carry a trigger frame; or a second data frame, where the second data frame is a trigger-based data frame received by the first access point device.

In some embodiments, at least one of the following in the first transmission parameter is indicated by a first field in the first frame: a first length, where the first length is a length of a first PPDU carrying the first target frame; a first type, where the first type is a type of a GI and LTF of the first PPDU; or a first number of symbols, where the first number of symbols is a number of LTF symbols of the first PPDU.

In some embodiments, the first field includes: a first subfield, a second subfield, and a third subfield.

The first length is indicated by the first subfield.

The first type is indicated by the second subfield.

The first number of symbols is indicated by the third subfield.

In some embodiments, the first field includes: a first subfield.

The first length is indicated by the first subfield.

The first type is the same as a type of a GI and an LTF of a second PPDU carrying a second frame.

The first number of symbols is the same as a number of LTF symbols of the second PPDU.

In some embodiments, if the first target frame is a first acknowledgement frame, the second frame is a first data frame transmitted by the first access point device before the first acknowledgement frame.

Optionally, if the first target frame is a second data frame, the second frame is a second trigger frame of the first access point device, and the second trigger frame is used for triggering transmission of the second data frame.

In some embodiments, the target transmission parameter further includes a second transmission parameter for scheduling transmission of a second target frame, and the second target frame is transmitted by the first access point device to the first non-access point device.

In some embodiments, at least one of the following in the second transmission parameter is indicated by the first field: a second length, where the second length is a length of a third PPDU carrying the second target frame; a second type, where the second type is a type of a GI and an LTF of the third PPDU; or a second number of symbols, where the second number of symbols is a number of LTF symbols of the third PPDU.

In some embodiments, the second target frame is a first trigger frame, which is independent of the first data frame and is used for triggering the first acknowledegment frame.

In some embodiments, the first field includes: a first subfield.

The first length and the second length are indicated by the first subfield.

In some embodiments, the first field includes: a fourth subfield.

The second length is indicated by the fourth subfield.

In some embodiments, the third PPDU is a non-HT PPDU or a non-HT duplicated PPDU.

In some embodiments, the first field includes a fourth subfield, a fifth subfield, and a sixth subfield.

The second length is indicated by the fourth subfield.

The second type is indicated by the fifth subfield.

The second number of symbols is indicated by the sixth subfield.

In some embodiments, the second target frame is a second acknowledgement frame for acknowledgement of the second data frame.

In some embodiments, the second length is the same as a length of a fourth PPDU carrying a second trigger frame, the second trigger frame is used for triggering the second data frame.

The second type is the same as a Type of GI and LTF of the fourth PPDU.

The second number of symbols is the same as a number of symbols in the LTF of the fourth PPDU.

In some embodiments, the first field includes a fourth subfield, a fifth subfield, and a sixth subfield.

The second length is indicated by the fourth subfield.

The second type is indicated by the fifth subfield.

The second number of symbols is indicated by the sixth subfield.

In some embodiments, the first field further includes at least one of: a seventh subfield indicating a third number of symbols, where the seventh number of symbols is a number of symbols of a SIGNAL field in the third PPDU; or an eighth subfield indicating a modulation and coding scheme of the SIGNAL field.

In some embodiments, if the first frame is the multi-AP coordinated transmission trigger frame, the first field is located in one of: a trigger dependent common information subfield in a common information field; or a trigger dependent user information subfield in a special user information field.

In some embodiments, if the first frame is a multi-user request to send transmission state trigger frame, the first field is located in a special user information field, and a value of an AID in the special user information field is a set value.

In some embodiments, the first transmission parameter includes a first RU or MRU determined by a second field of the first frame, and the first RU or MRU is an RU or MRU used in transmission of the first target frame.

In some embodiments, the first RU or MRU is: an RU or an MRU indicated by the second field; or an RU or an MRU allocated by the first access point device to the first non-access point device based on an RU or an MRU indicated by the second field.

In some embodiments, the second transmission parameter includes a second RU or MRU determined by a second field of the first frame, the second RU or MRU is an RU or MRU used in transmission of the second target frame.

In some embodiments, the second RU or the MRU is an RU or an MRU indicated by the second field.

In some embodiments, the second field is used to indicate an RU or an MRU in conjunction with at least one of: a bandwidth subfield in a common information field of a multiple access point coordinated transmission trigger frame; a bandwidth subfield extension in a special user information field of a multiple access point coordinated transmission trigger frame; or a PS160 subfield in a variant user information field of a multiple access point coordinated transmission trigger frame.

The first RU is one of the at least one RU.

In some embodiments, the second field is located in a variable user information field of the first frame.

In some embodiments, the first frame includes a third field for indicating a transmission parameter of one of: a first acknowledgement frame in a case where a first data frame transmitted by the first access point device carries a trigger frame, where the first acknowledgement frame is used for acknowledgement of the first data frame; a first acknowledgement frame and a first trigger frame in a case where a first data frame does not carry a trigger frame, where the first trigger frame is used for triggering the first acknowledgement frame; or a second data frame received by the first access point device.

In some embodiments, if the third field is used to indicate transmission parameters of the first acknowledgement frame and the first trigger frame, the third field is used to indicate a length of a PPDU carrying the first trigger frame, the first trigger frame is carried on a non-HT PPDU or a non-HT duplicated PPDU.

In some embodiments, if the third field is used for indicating the transmission parameter of the second data frame, a transmission parameter of the second acknowledgement frame is the same as a transmission parameter of the second trigger frame, the second trigger frame is used for triggering transmission of the second data frame, and the second acknowledgement frame is used for acknowledgement of the second data frame.

In some embodiments, the third field includes: a ninth subfield for indicating a length of a fifth PPDU; a tenth subfield for indicating a type of an LTF in the fifth PPDU; and an eleventh subfield for indicating a number of symbols of the LTF in the fifth PPDU.

In some embodiments, the first frame further includes a fourth field for indicating a third RU or MRU, and the third RU or the MRU is used when transmitting one of: a first acknowledgement frame in a case where the first data frame carries a trigger frame, the first acknowledgement frame being used for acknowledgement of the first data frame; a first acknowledgement frame and a first trigger frame in a case where the first data frame does not carry a trigger frame, the first trigger frame being used for triggering the first acknowledgement frame; or a second data frame, where the second data frame is a data frame transmitted by the first non-access point device to the first access point device.

**In** some embodiments, the fourth field is used to indicate the third RU or the MRU in conjunction with at least one of: a bandwidth subfield in a common information field of a multiple access point coordinated transmission trigger frame; a bandwidth subfield extension in a special user information field of a multiple access point coordinated transmission trigger frame; or a PS160 subfield in a variant user information field of a multiple access point coordinated transmission trigger frame.

FIG. 43 is a diagram of a structural composition of the second access point device provided in the embodiment of the disclosure, and as illustrated in FIG. 43, the second access point device 4300 includes a second communication unit 4301.

The second communication unit 4301 is configured to transmit a first frame to a first access point device, where the first frame is used to indicate a target transmission parameter, the target transmission parameter is used for each of at least one access point device participating in a coordinated transmission to schedule transmission of at least one target frame, the at least one access point device includes a first non-access point device, the target frame is located after a first one frame transmitted between the first access point device and the first non-access point device.

It is understood that the second access point device further includes a processing unit, configured to generate the first frame based on the target transmission parameter.

**In** some embodiments, the second access point device is an access point device that initiates a multi-access point device coordination.

**In** some embodiments, the first frame includes at least one of: a multiple access point coordinated transmission trigger frame; or a multi-user request to send-triggered transmission opportunity sharing frame.

**In** some embodiments, the target transmission parameter includes a first transmission parameter for scheduling transmission of the first target frame, and the first target frame is transmitted by the first non-access point device to the first access point device.

**In** some embodiments, the first target frame includes at least one of: a first acknowledgement frame for acknowledgement of a first data frame transmitted by the first access point device, where the first data frame carries or does not carry a trigger frame; or a second data frame, where the second data frame is a trigger-based data frame received by the first access point device.

**In** some embodiments, at least one of the following in the first transmission parameter is indicated by a first field in the first frame: a first length, where the first length is a length of a first PPDU carrying the first target frame; a first type, where the first type is a type of a GI and LTF of the first PPDU; or a first number of symbols, where the first number of symbols is a number of LTF symbols of the first PPDU.

**In** some embodiments, the first field includes: a first subfield, a second subfield, and a third subfield.

The first length is indicated by the first subfield.

The first type is indicated by the second subfield.

The first number of symbols is indicated by the third subfield.

**In** some embodiments, the first field includes: a first subfield.

The first length is indicated by the first subfield.

The first type is the same as a type of a GI and an LTF of a second PPDU carrying a second frame.

The first number of symbols is the same as a number of LTF symbols of the second PPDU.

**In** some embodiments, if the first target frame is a first acknowledgement frame, the second frame is a first data frame transmitted by the first access point device before the first acknowledgement frame.

Optionally, if the first target frame is a second data frame, the second frame is a second trigger frame of the first access point device, and the second trigger frame is used for triggering transmission of the second data frame.

**In** some embodiments, the target transmission parameter further includes a second transmission parameter for scheduling transmission of a second target frame, and the second target frame is transmitted by the first access point device to the first non-access point device.

**In** some embodiments, at least one of the following in the second transmission parameter is indicated by the first field: a second length, where the second length is a length of a third PPDU carrying the second target frame; a second type, where the second type is a type of a GI and an LTF of the third PPDU; or a second number of symbols, where the second number of symbols is a number of LTF symbols of the third PPDU.

**In** some embodiments, the second target frame is a first trigger frame, which is independent of the first data frame and is used for triggering the first acknowledegment frame.

**In** some embodiments, the first field includes: a first subfield.

The first length and the second length are indicated by the first subfield.

**In** some embodiments, the first field includes: a fourth subfield.

The second length is indicated by the fourth subfield.

**In** some embodiments, the third PPDU is a non-HT PPDU or a non-HT duplicated PPDU.

**In** some embodiments, the first field includes a fourth subfield, a fifth subfield, and a sixth subfield.

The second length is indicated by the fourth subfield.

The second type is indicated by the fifth subfield.

The second number of symbols is indicated by the sixth subfield.

In some embodiments, the second target frame is a second acknowledgement frame for acknowledgement of the second data frame.

In some embodiments, the second length is the same as a length of a fourth PPDU carrying a second trigger frame, the second trigger frame is used for triggering the second data frame.

The second type is the same as a Type of GI and LTF of the fourth PPDU.

The second number of symbols is the same as a number of symbols in the LTF of the fourth PPDU.

In some embodiments, the first field includes a fourth subfield, a fifth subfield, and a sixth subfield.

The second length is indicated by the fourth subfield.

The second type is indicated by the fifth subfield.

The second number of symbols is indicated by the sixth subfield.

In some embodiments, the first field further includes at least one of: a seventh subfield indicating a third number of symbols, where the seventh number of symbols is a number of symbols of a SIGNAL field in the third PPDU; or an eighth subfield indicating a modulation and coding scheme of the SIGNAL field.

In some embodiments, if the first frame is the multi-AP coordinated transmission trigger frame, the first field is located in one of: a trigger dependent common information subfield in a common information field; or a trigger dependent user information subfield in a special user information field.

**In** some embodiments, if the first frame is a multi-user request to send transmission state trigger frame, the first field is located in a special user information field, and a value of an AID in the special user information field is a set value.

In some embodiments, the first transmission parameter includes a first RU or MRU determined by a second field of the first frame, and the first RU or MRU is an RU or MRU used in transmission of the first target frame.

In some embodiments, the first RU or MRU is the RU or MRU indicated by the second field Or an RU or an MRU allocated by the first access point device to the first non-access point device based on an RU or an MRU indicated by the second field.

In some embodiments, the second transmission parameter includes a second RU or MRU determined by a second field of the first frame, the second RU or MRU is an RU or MRU used in transmission of the second target frame.

In some embodiments, the second RU or the MRU is an RU or an MRU indicated by the second field.

In some embodiments, the second field is used to indicate an RU or an MRU in conjunction with at least one of: a bandwidth subfield in a common information field of a multiple access point coordinated transmission trigger frame; a bandwidth subfield extension in a special user information field of a multiple access point coordinated transmission trigger frame; or a PS160 subfield in a variant user information field of a multiple access point coordinated transmission trigger frame.

In some embodiments, the second field is located in a variable user information field of the first frame.

In some embodiments, the first frame includes a third field for indicating a transmission parameter of one of: a first acknowledgement frame in a case where a first data frame transmitted by the first access point device carries a trigger frame, where the first acknowledgement frame is used for acknowledgement of the first data frame; a first acknowledgement frame and a first trigger frame in a case where a first data frame does not carry a trigger frame, where the first trigger frame is used for triggering the first acknowledgement frame; or a second data frame received by the first access point device.

In some embodiments, if the third field is used to indicate transmission parameters of the first acknowledgement frame and the first trigger frame, the third field is used to indicate a length of a PPDU carrying the first trigger frame, the first trigger frame is carried on a non-HT PPDU or a non-HT duplicated PPDU.

**In** some embodiments, if the third field is used for indicating the transmission parameter of the second data frame, a transmission parameter of the second acknowledgement frame is the same as a transmission parameter of the second trigger frame, the second trigger frame is used for triggering transmission of the second data frame, and the second acknowledgement frame is used for acknowledgement of the second data frame.

In some embodiments, the third field includes: a ninth subfield for indicating a length of a fifth PPDU; a tenth subfield for indicating a type of an LTF in the fifth PPDU; and an eleventh subfield for indicating a number of symbols of the LTF in the fifth PPDU.

In some embodiments, the first frame further includes a fourth field for indicating a third RU or MRU, and the third RU or the MRU is used when transmitting one of: a first acknowledgement frame in a case where the first data frame carries a trigger frame, the first acknowledgement frame being used for acknowledgement of the first data frame; a first acknowledgement frame and a first trigger frame in a case where the first data frame does not carry a trigger frame, the first trigger frame being used for triggering the first acknowledgement frame; or a second data frame, where the second data frame is a data frame transmitted by the first non-access point device to the first access point device.

**In** some embodiments, the fourth field is used to indicate the third RU or the MRU in conjunction with at least one of: a bandwidth subfield in a common information field of a multiple access point coordinated transmission trigger frame; a bandwidth subfield extension in a special user information field of a multiple access point coordinated transmission trigger frame; or a PS160 subfield in a variant user information field of a multiple access point coordinated transmission trigger frame.

Those skilled in the art would appreciate that the relevant description of the above first access point device or second access point device according to the embodiments of the present disclosure may be understood with reference to the relevant description of the methods for transmission control according to the embodiments of the present disclosure.

FIG. 44 is a schematic structural diagram of a communication device 4400 provided in an embodiment of the disclosure. The communication device may be a first access point device or a second access point device. The communication device 4400 illustrated in FIG. 44 may include a processor 4410 configured to invoke and run a computer program from a memory to implement the methods in the embodiments of the disclosure.

Optionally, as illustrated in FIG. 44, the communication device 4400 may further include a memory 4420. The processor 4410 may invoke and run a computer program from the memory 4420 to implement the methods in the embodiments of the disclosure.

Herein, the memory 4420 may be a separate device independent of the processor 4410 or may be integrated in the processor 4410.

Optionally, as illustrated in FIG. 44, the communication device 4400 may further include a transceiver 4430, and the processor 4410 may control the transceiver 4430 to communicate with other devices. Specifically, the processor 2010 may control the transceiver 4430 to transmit information or data to other devices, or receive information or data from other devices.

Herein, the transceiver 4430 may include a transmitter and a receiver. The transceiver 4430 may further include antennas, and the number of the antennas is one or more.

The communication device 4400 may specifically be the first access point device in the embodiments of the present disclosure, and the communication device 4400 may implement corresponding processes implemented by the first access point device in various methods of the embodiments of the present disclosure, which are not elaborated here for the sake of brevity.

The communication device 4400 may specifically be the second access point device in the embodiments of the present disclosure, and the communication device 4400 may implement corresponding processes implemented by the second access point device in various methods of the embodiments of the present disclosure, which are not elaborated here for the sake of brevity.

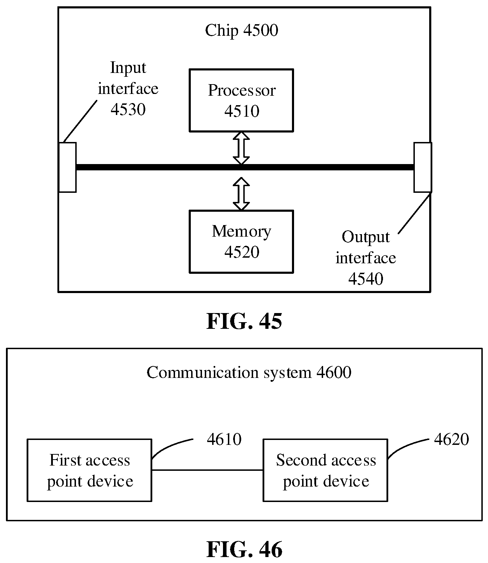

FIG. 45 is a schematic structural diagram of a chip according to an embodiment of the disclosure. The chip 4500 illustrated in FIG. 45 includes a processor 4510 configured to invoke and run a computer program from a memory to implement the methods in the embodiments of the present disclosure.

Optionally, as illustrated in FIG. 45, the chip 4500 may further include a memory 4520, and the processor 4510 may invoke and run a computer program from the memory 4520 to implement the methods in the embodiments of the present disclosure.

Herein, the memory 4520 may be a separate device independent of the processor 4510, or may be integrated in the processor 4510.

Optionally, the chip 4500 may further include an input interface 4530. The processor 4510 may control the input interface 4530 to communicate with other devices or chips. Specifically, the processor 4510 may control the input interface 4530 to acquire information or data transmitted by other devices or chips.

Optionally, the chip 4500 may further include an output interface 4540. The processor 4510 may control the output interface 4540 to communicate with other devices or chips. Specifically, the processor 4510 may control the output interface 4540 to output information or data to other devices or chips.

The chip may be applied to the first access point device in the embodiments of the present disclosure, and the chip may implement corresponding processes implemented by the first access point device in various methods of the embodiments of the present disclosure, which are not elaborated here for the sake of brevity.

The chip may be applied to the second access point device in the embodiments of the present disclosure, and the chip may implement corresponding processes implemented by the second access point device in various methods of the embodiments of the present disclosure, which are not elaborated here for the sake of brevity.

**It** should be understood that the chip mentioned in the embodiments of the present disclosure may also be referred to as a system-level chip, a system chip, a chip system, or a system-on-chip chip, or the like.

FIG. 46 is a schematic block diagram of a communication system 4600 provided in an embodiment of the disclosure. As illustrated in FIG. 46, the communication system 4600 includes the first access point device 4610 and the second access point device 4620.

Here, the first access point device 4610 may be used to implement corresponding processes implemented by the first access point device in above-mentioned methods, and the second access point device 4620 may be used to implement corresponding processes implemented by the second access point device in above-mentioned methods, which are not elaborated here for the sake of brevity.

**It** should be understood that the processor in the embodiments of the disclosure may be an integrated circuit chip having signal processing capability. In implementation, the various operations of the above method embodiments may be accomplished by integrated logic circuit of hardware or instructions in the form of software in a processor. The processor above may include: a general purpose processor, a Digital Signal Processor (DSP), an Application Specific Integrated Circuit (ASIC), a Field Programmable Gate Array (FPGA) or other programmable logic devices, discrete gate or transistor logic devices, discrete hardware components. The methods, operations and logic block diagrams disclosed in embodiments of the present disclosure may be implemented or performed. The general purpose processor may be a microprocessor or the processor may be any conventional processor or the like. The operations of the methods disclosed in combination with the embodiments of the present disclosure can be directly embodied as execution of a hardware decoding processor or combined execution of hardware and software modules in the decoding processor. The software module may be located in a Random-Access Memory (RAM), a flash memory, a Read-Only Memory (ROM), a Programmable ROM (PROM) or an Electrically Erasable EPROM (EEPROM), a register and other storage medium mature in the art. The storage medium is located in the memory, and the processor reads information in the memory and completes the operations of the above methods in combination with its hardware.

It is understood that the memory in embodiments of the present disclosure may be volatile memory or non-volatile memory or may include both volatile and non-volatile memory. The non-volatile memory may be an ROM, a PROM, an Erasable PROM (EPROM), an EEPROM, or a flash memory. The volatile memory may be an RAM which serves as an external cache. By way of illustration but not limitation, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memory of the systems and methods described herein is intended to include but not be limited to these and any other suitable types of memories.

It should be understood that the memory described above is exemplary but not limiting. For example, the memory in embodiments of the present disclosure may also be a SRAM, a DRAM, a SDRAM, a DDR SDRAM, an ESDRAM, an SLDRAM, a DR RAM, or the like. That is, the memory in embodiments of the present disclosure is intended to include but not be limited to these and any other suitable types of memories.

An embodiment of the disclosure also provides a computer-readable storage medium for storing a computer program.

Optionally, the computer-readable storage medium may be applied to the first access point device in the embodiments of the disclosure, and the execution of the computer program causes the computer to execute corresponding processes implemented by the first access point device in various methods of the embodiments of the present disclosure, which are not elaborated here for the sake of brevity.

Optionally, the computer-readable storage medium may be applied to the second access point device in the embodiments of the disclosure, and the execution of the computer program causes the computer to execute corresponding processes implemented by the second access point device in various methods of the embodiments of the present disclosure, which are not elaborated here for the sake of brevity.

An embodiment of the disclosure also provides a computer program product including computer program instructions.

Optionally, the computer program product may be applied to the first access point device in the embodiments of the disclosure, and the execution of the computer program instructions causes the computer to execute corresponding processes implemented by the first access point device in various methods of the embodiments of the present disclosure, which are not elaborated here for the sake of brevity.

Optionally, the computer program product may be applied to the second access point device in the embodiments of the disclosure, and the execution of the computer program instructions causes the computer to execute corresponding processes implemented by the second access point device in various methods of the embodiments of the present disclosure, which are not elaborated here for the sake of brevity.

An embodiment of the disclosure also provides a computer program.

Optionally, the computer program may be applied to the first access point device in the embodiments of the disclosure, and the computer program causes a computer to execute corresponding processes implemented by the first access point device in various methods of the embodiments of the present disclosure when the computer program is run on the computer, which are not elaborated here for the sake of brevity.

Optionally, the computer program may be applied to the second access point device in the embodiments of the disclosure, and the computer program causes a computer to execute corresponding processes implemented by the second access point device in various methods of the embodiments of the present disclosure when the computer program is run on the computer, which are not elaborated here for the sake of brevity.

Those of ordinary skill in the art would appreciate that the various exemplary units and algorithm operations described in connection with the embodiments in the present disclosure can be implemented in electronic hardware or a combination of computer software and electronic hardware. Whether these functions are performed in hardware or software depends on the specific application and design constraints of the technical solutions. Those of ordinary skill may use different methods for each particular application to implement the described functionality, but such implementation should not be considered outside the scope of the present disclosure.

Those skilled in the art would clearly appreciate that for the specific operating processes of the above-described systems, devices and units, the references may be made to the corresponding processes in the aforementioned method embodiments and would not be repeated herein, for convenience and brevity of description.

**In** several embodiments provided in the present disclosure, it should be understood that the disclosed systems, devices and methods may be implemented in other ways. For example, the above-described embodiments of the devices are only schematic. For example, the division of the unit is only a logical function division, and in practice, there may be another division method, for example, multiple units or components may be combined or integrated into another system, or some features may be ignored or not performed. Furthermore, the coupling or direct coupling or communication connection between each other illustrated or discussed may be indirect coupling or communication connection through some interfaces, devices or units, and may be electrical, mechanical or other forms.

The units illustrated as separate components may or may not be physically separated, and the components displayed as unit may or may not be physical units, that is, the units and the components may be located in one place, or may be distributed over multiple network units. Part or all of the units can be selected according to the actual needs to achieve the purpose of the embodiments.

**In** addition, various functional units in the embodiments of the present disclosure may be integrated in one processing unit, or various units may exist physically alone, or two or more units may be integrated in one unit.

The functions may be stored in a computer readable storage medium if implemented in the form of software functional units and sold or used as stand-alone products. In view of this understanding, the technical solutions of the present disclosure in essence, or the part that contributes to the related art, or the part of the technical solutions can be embodied in the form of a software product. The computer software product is stored in a storage medium and includes instructions that enable a computer device (which may be a personal computer, server, network device, or the like) to perform all or part of the operations of the methods described in various embodiments of the present disclosure. The aforementioned storage medium includes a USB flash disk, a removable hard disk, a ROM, a RAM, a magnetic disk or an optical disk and other medium capable of storing program codes.

The above-mentioned is only the specific implementation of the present disclosure, but the scope of protection of the present disclosure is not limited thereto. Any variation or substitution readily conceivable by those skilled in the art within the scope of the technology disclosed in the present disclosure shall be covered by the scope of protection of the present disclosure. Therefore, the scope of protection of the present disclosure should be subject to the scope of protection of the claims.

## Claims

1. A method for transmission control, comprising:
receiving, by a first access point device, a first frame transmitted by a second access point device, wherein the first frame is used to indicate a target transmission parameter, the target transmission parameter is used for each of at least one access point device participating in a coordinated transmission to schedule transmission of at least one target frame, the at least one access point device comprises a first non-access point device, and the target frame is located after a first one frame transmitted between the first access point device and the first non-access point device.

2. The method of claim 1, wherein the second access point device is an access point device that initiates a multi-access point device coordination.

3. The method of claim 1 or 2, wherein the first frame comprises at least one of:
a multiple access point coordinated transmission trigger frame; or
a multi-user request to send-triggered transmission opportunity sharing frame.

4. The method of any one of claims 1 to 3, wherein the target transmission parameter comprises a first transmission parameter for scheduling transmission of a first target frame, and the first target frame is transmitted by the first non-access point device to the first access point device.

5. The method of claim 4, wherein the first target frame comprises at least one of:
a first acknowledgement frame for acknowledgement of a first data frame transmitted by the first access point device, wherein the first data frame carries or does not carry a trigger frame; or
a second data frame, wherein the second data frame is a trigger-based data frame received by the first access point device.

6. The method of claim 4 or 5, wherein at least one of following in the first transmission parameter is indicated by a first field in the first frame:
a first length, the first length being a length of a first Physical Layer Protocol Data Unit (PPDU) carrying the first target frame;
a first type, the first type being a type of a Guard Interval (GI) and a Long Training Field (LTF) of the first PPDU; or
a first number of symbols, the first number of symbols being a number of symbols in the LTF of the first PPDU.

7. The method of claim 6, wherein the first field comprises: a first subfield, a second subfield, and a third subfield;
the first length is indicated by the first subfield;
the first type is indicated by the second subfield; and
the first number of symbols is indicated by the third subfield.

8. The method of claim 6, wherein the first field comprises: a first subfield;
the first length is indicated by the first subfield;
the first type is the same as a Type of GI and LTF of a second PPDU carrying a second frame; and
the first number of symbols is the same as a number of symbols in the LTF of the second PPDU.

9. The method of claim 8, wherein
if the first target frame is a first acknowledgement frame, the second frame is a first data frame transmitted by the first access point device before the first acknowledgement frame; or
if the first target frame is a second data frame, the second frame is a second trigger frame of the first access point device, and the second trigger frame is used for triggering transmission of the second data frame.

10. The method of any one of claims 6 to 9, wherein the target transmission parameter further comprises a second transmission parameter for scheduling transmission of a second target frame, and the second target frame is transmitted by the first access point device to the first non-access point device.

11. The method of claim 10, wherein at least one of following in the second transmission parameter is indicated by the first field:
a second length, the second length being a length of a third PPDU carrying the second target frame;
a second type, the second type being a Type of GI and LTF of the third PPDU; and
a second number of symbols, the second number of symbols being a number of symbols in the LTF of the third PPDU.

12. The method of claim 11, wherein the second target frame is a first trigger frame, which is independent of the first data frame and is used for triggering the first acknowledgement frame.

13. The method of claim 12, wherein the first field comprises: a first subfield;
the first length and the second length are indicated by the first subfield.

14. The method of claim 13, wherein the first field comprises: a fourth subfield;
the second length is indicated by the fourth subfield.

15. The method of claim 13 or 14, wherein the third PPDU is a non-High Throughput (non-HT) PPDU or a non-HT duplicated PPDU.

16. The method of claim 12, wherein the first field comprises a fourth subfield, a fifth subfield, and a sixth subfield:
the second length is indicated by the fourth subfield;
the second type is indicated by the fifth subfield; and
the second number of symbols is indicated by the sixth subfield.

17. The method of claim 11, wherein the second target frame is a second acknowledgement frame for acknowledgement of the second data frame.

18. The method of claim 17, wherein
the second length is the same as a length of a fourth PPDU carrying a second trigger frame, the second trigger frame is used for triggering the second data frame;
the second type is the same as a Type of GI and LTF of the fourth PPDU; and
the second number of symbols is the same as a number of symbols in the LTF of the fourth PPDU.

19. The method of claim 17, wherein the first field comprises a fourth subfield, a fifth subfield, and a sixth subfield:
the second length is indicated by the fourth subfield;
the second type is indicated by the fifth subfield; and
the second number of symbols is indicated by the sixth subfield.

20. The method of claim 16 or 19, wherein the first field further comprises at least one of:
a seventh subfield indicating a third number of symbols, the seventh number of symbols being a number of symbols of a signal field in the third PPDU; or
an eighth subfield indicating a modulation and coding scheme of the signal field.

21. The method of any one of claims 6 to 20, wherein if the first frame is a multiple access point coordinated transmission trigger frame, the first field is located at one of:
a trigger dependent common information subfield in a common information field; or
a trigger dependent user information subfield in a special user information field.

22. The method of any one of claims 6 to 20, wherein if the first frame is a multi-user request to send transmission state trigger frame, the first field is located in a special user information field, and a value of an AID in the special user information field is a set value.

23. The method of any one of claims 4 to 22, wherein the first transmission parameter comprises a first Resource Unit (RU) or a Multiple Resource Unit (MRU), the first RU or the MRU is determined by a second field of the first frame, and the first RU is an RU or an MRU used in transmission of the first target frame.

24. The method of claim 23, wherein the first RU or the MRU is:
an RU or an MRU indicated by the second field; or
an RU or an MRU which is allocated by the first access point device to the first non-access point device according to the RU or the MRU indicated by the second field.

25. The method of any one of claims 10 to 20, wherein the second transmission parameter comprises a second RU or an MRU, the second RU or the MRU is determined by a second field of the first frame, and the second RU or the MRU is an RU or an MRU used in transmission of the second target frame.

26. The method of claim 25, wherein the second RU or the MRU is an RU or an MRU indicated by the second field.

27. The method of any one of claims 23 to 26, wherein the second field is used to indicate an RU or an MRU in conjunction with at least one of:
a bandwidth subfield in a common information field of a multiple access point coordinated transmission trigger frame;
a bandwidth subfield extension in a special user information field of the multiple access point coordinated transmission trigger frame; or
a PS160 subfield in a variant user information field of the multiple access point coordinated transmission trigger frame.

28. The method of any one of claims 23 to 27, wherein the second field is located in a variant user information field of the first frame.

29. The method of any one of claims 1 to 3, wherein the first frame comprises a third field for indicating a transmission parameter of one of:
a first acknowledgement frame in a case where a first data frame transmitted by the first access point device carries a trigger frame, the first acknowledgement frame being used for acknowledgement of the first data frame;
a first acknowledgement frame and a first trigger frame in a case where the first data frame does not carry the trigger frame, the first trigger frame being used for triggering the first acknowledgement frame; or
a second data frame received by the first access point device.

30. The method of claim 29, wherein if the third field is used for indicating the transmission parameter of the first acknowledgement frame and the first trigger frame, the third field is used for indicating a length of a PPDU carrying the first trigger frame, and the first trigger frame is carried on a non-High Throughput (non-HT) PPDU or a non-HT duplicated PPDU.

31. The method of claim 29, wherein if the third field is used for indicating the transmission parameter of the second data frame, a transmission parameter of the second acknowledgement frame is the same as a transmission parameter of the second trigger frame, the second trigger frame is used for triggering transmission of the second data frame, and the second acknowledgement frame is used for acknowledgement of the second data frame.

32. The method of any one of claims 29 to 31, wherein the third field comprises:
a ninth subfield for indicating a length of a fifth PPDU;
a tenth subfield for indicating a type of an LTF in the fifth PPDU; and
an eleventh subfield for indicating a number of symbols of the LTF in the fifth PPDU.

33. The method of any one of claims 29 to 31, wherein the first frame further comprises a fourth field for indicating a third RU or an MRU, and the third RU or the MRU is used when transmitting one of:
a first acknowledgement frame in a case where the first data frame carries a trigger frame, the first acknowledgement frame being used for acknowledgement of the first data frame;
a first acknowledgement frame and a first trigger frame in a case where the first data frame does not carry the trigger frame, the first trigger frame being used for triggering the first acknowledgement frame; or
a second data frame, the second data frame being a data frame transmitted by the first non-access point device to the first access point device.

34. The method of claim 33, wherein the fourth field is used to indicate the third RU or the MRU in conjunction with at least one of:
a bandwidth subfield in a common information field of a multiple access point coordinated transmission trigger frame;
a bandwidth subfield extension in a special user information field of the multiple access point coordinated transmission trigger frame; or
a PS160 subfield in a variant user information field of the multiple access point coordinated transmission trigger frame.

35. A method for transmission control, comprising:
transmitting, by a second access point device, a first frame to a first access point device, wherein the first frame is used to indicate a target transmission parameter, the target transmission parameter is used for each of at least one access point device participating in a coordinated transmission to schedule transmission of at least one target frame, the at least one access point device comprises a first non-access point device, and the target frame is located after a first one frame transmitted between the first access point device and the first non-access point device.

36. The method of claim 35, wherein the second access point device is an access point device that initiates a multi-access point device coordination.

37. The method of claim 365 or 36, wherein the first frame comprises at least one of:
a multiple access point coordinated transmission trigger frame; or
a multi-user request to send-triggered transmission opportunity sharing frame.

38. The method of any one of claims 35 to 37, wherein the target transmission parameter comprises a first transmission parameter for scheduling transmission of a first target frame, and the first target frame is transmitted by the first non-access point device to the first access point device.

39. The method of claim 38, wherein the first target frame comprises at least one of:
a first acknowledgement frame for acknowledgement of a first data frame transmitted by the first access point device, wherein the first data frame carries or does not carry a trigger frame; or
a second data frame, wherein the second data frame is a trigger-based data frame received by the first access point device.

40. The method of claim 38 or 395, wherein at least one of following in the first transmission parameter is indicated by a first field in the first frame:
a first length, the first length being a length of a first Physical Layer Protocol Data Unit (PPDU) carrying the first target frame;
a first type, the first type being a type of a Guard Interval (GI) and a Long Training Field (LTF) of the first PPDU; or
a first number of symbols, the first number of symbols being a number of symbols in the LTF of the first PPDU.

41. The method of claim 40, wherein the first field comprises: a first subfield, a second subfield, and a third subfield;
the first length is indicated by the first subfield;
the first type is indicated by the second subfield; and
the first number of symbols is indicated by the third subfield.

42. The method of claim 40, wherein the first field comprises: a first subfield;
the first length is indicated by the first subfield;
the first type is the same as a Type of GI and LTF of a second PPDU carrying a second frame; and
the first number of symbols is the same as a number of symbols in the LTF of the second PPDU.

43. The method of claim 42, wherein
if the first target frame is a first acknowledgement frame, the second frame is a first data frame transmitted by the first access point device before the first acknowledgement frame; or
if the first target frame is a second data frame, the second frame is a second trigger frame of the first access point device, and the second trigger frame is used for triggering transmission of the second data frame.

44. The method of any one of claims 40 to 43, wherein the target transmission parameter further comprises a second transmission parameter for scheduling transmission of a second target frame, and the second target frame is transmitted by the first access point device to the first non-access point device.

45. The method of claim 44, wherein at least one of following in the second transmission parameter is indicated by the first field:
a second length, the second length being a length of a third PPDU carrying the second target frame;
a second type, the second type being a Type of GI and LTF of the third PPDU; and
a second number of symbols, the second number of symbols being a number of symbols in the LTF of the third PPDU.

46. The method of claim 45, wherein the second target frame is a first trigger frame, which is independent of the first data frame and is used for triggering the first acknowledgement frame.

47. The method of claim 46, wherein the first field comprises: a first subfield;
the first length and the second length are indicated by the first subfield.

48. The method of claim 47, wherein the first field comprises: a fourth subfield;
the second length is indicated by the fourth subfield.

49. The method of claim 47 or 48, wherein the third PPDU is a non-High Throughput (non-HT) PPDU or a non-HT duplicated PPDU.

50. The method of claim 46, wherein the first field comprises a fourth subfield, a fifth subfield, and a sixth subfield:
the second length is indicated by the fourth subfield;
the second type is indicated by the fifth subfield; and
the second number of symbols is indicated by the sixth subfield.

51. The method of claim 45, wherein the second target frame is a second acknowledgement frame for acknowledgement of the second data frame.

52. The method of claim 51, wherein
the second length is the same as a length of a fourth PPDU carrying a second trigger frame, the second trigger frame is used for triggering the second data frame;
the second type is the same as a Type of GI and LTF of the fourth PPDU; and
the second number of symbols is the same as a number of symbols in the LTF of the fourth PPDU.

53. The method of claim 51, wherein the first field comprises a fourth subfield, a fifth subfield, and a sixth subfield:
the second length is indicated by the fourth subfield;
the second type is indicated by the fifth subfield; and
the second number of symbols is indicated by the sixth subfield.

54. The method of claim 50 or 53, wherein the first field further comprises at least one of:
a seventh subfield indicating a third number of symbols, the seventh number of symbols being a number of symbols of a signal field in the third PPDU; or
an eighth subfield indicating a modulation and coding scheme of the signal field.

55. The method of any one of claims 40 to 54, wherein if the first frame is a multiple access point coordinated transmission trigger frame, the first field is located at one of:
a trigger dependent common information subfield in a common information field; or
a trigger dependent user information subfield in a special user information field.

56. The method of any one of claims 40 to 54, wherein if the first frame is a multi-user request to send transmission state trigger frame, the first field is located in a special user information field, and a value of an AID in the special user information field is a set value.

57. The method of any one of claims 38 to 56, wherein the first transmission parameter comprises a first Resource Unit (RU) or a Multiple Resource Unit (MRU), the first RU or the MRU is determined by a second field of the first frame, and the first RU is an RU or an MRU used in transmission of the first target frame.

58. The method of claim 57, wherein the first RU or the MRU is:
an RU or an MRU indicated by the second field; or
an RU or an MRU which is allocated by the first access point device to the first non-access point device according to the RU or the MRU indicated by the second field.

59. The method of any one of claims 44 to 54, wherein the second transmission parameter comprises a second RU or an MRU, the second RU or the MRU is determined by a second field of the first frame, and the second RU or the MRU is an RU or an MRU used in transmission of the second target frame.

60. The method of claim 59, wherein the second RU or the MRU is an RU or an MRU indicated by the second field.

61. The method of any one of claims 57 to 60, wherein the second field is used to indicate an RU or an MRU in conjunction with at least one of:
a bandwidth subfield in a common information field of a multiple access point coordinated transmission trigger frame;
a bandwidth subfield extension in a special user information field of the multiple access point coordinated transmission trigger frame; or
a PS160 subfield in a variant user information field of the multiple access point coordinated transmission trigger frame.

62. The method of any one of claims 57 to 61, wherein the second field is located in a variant user information field of the first frame.

63. The method of any one of claims 35 to 37, wherein the first frame comprises a third field for indicating a transmission parameter of one of:
a first acknowledgement frame in a case where a first data frame transmitted by the first access point device carries a trigger frame, the first acknowledgement frame being used for acknowledgement of the first data frame;
a first acknowledgement frame and a first trigger frame in a case where the first data frame does not carry the trigger frame, the first trigger frame being used for triggering the first acknowledgement frame; or
a second data frame received by the first access point device.

64. The method of claim 63, wherein if the third field is used for indicating the transmission parameter of the first acknowledgement frame and the first trigger frame, the third field is used for indicating a length of a PPDU carrying the first trigger frame, and the first trigger frame is carried on a non-High Throughput (non-HT) PPDU or a non-HT duplicated PPDU.

65. The method of claim 63, wherein if the third field is used for indicating the transmission parameter of the second data frame, a transmission parameter of the second acknowledgement frame is the same as a transmission parameter of the second trigger frame, the second trigger frame is used for triggering transmission of the second data frame, and the second acknowledgement frame is used for acknowledgement of the second data frame.

66. The method of any one of claims 63 to 65, wherein the third field comprises:
a ninth subfield for indicating a length of a fifth PPDU;
a tenth subfield for indicating a type of an LTF in the fifth PPDU; and
an eleventh subfield for indicating a number of symbols of the LTF in the fifth PPDU.

67. The method of any one of claims 63 to 65, wherein the first frame further comprises a fourth field for determining a third RU or an MRU, and the third RU or the MRU is an RU or MRU used when transmitting one of:
a first acknowledgement frame in a case where the first data frame carries a trigger frame, the first acknowledgement frame being used for acknowledgement of the first data frame;
a first acknowledgement frame and a first trigger frame in a case where the first data frame does not carry the trigger frame, the first trigger frame being used for triggering the first acknowledgement frame; or
a second data frame, the second data frame being a data frame transmitted by the first non-access point device to the first access point device.

68. The method of claim 67, wherein the fourth field is used to indicate the third RU or the MRU in conjunction with at least one of:
a bandwidth subfield in a common information field of a multiple access point coordinated transmission trigger frame;
a bandwidth subfield extension in a special user information field of the multiple access point coordinated transmission trigger frame; or
a PS160 subfield in a variant user information field of the multiple access point coordinated transmission trigger frame.

69. A first access point device, comprising:
a first communication unit, configured to receive a first frame transmitted by a second access point device, wherein the first frame is used to indicate a target transmission parameter, the target transmission parameter is used for each of at least one access point device participating in a coordinated transmission to schedule transmission of at least one target frame, the at least one access point device comprises a first non-access point device, the target frame is located after a first one frame transmitted between the first access point device and the first non-access point device.

70. A second access point device, comprising:
a second communication unit, configured to transmit a first frame to a first access point device, wherein the first frame is used to indicate a target transmission parameter, the target transmission parameter is used for each of at least one access point device participating in a coordinated transmission to schedule transmission of at least one target frame, the at least one access point device comprises a first non-access point device, the target frame is located after a first one frame transmitted between the first access point device and the first non-access point device.

71. An access point device, comprising: a processor and a memory, wherein the memory is configured to store a computer program; and the processor is configured to call the computer program stored in the memory and run the computer program, to cause the access point device to perform the method of any one of claims 1 to 34 or the method of any one of claims 35 to 68.

72. A chip, comprising: a processor configured to call a computer program from a memory and run the computer program to cause a device on which the chip is installed to perform the method of any one of claims 1 to 34 or the method of any one of claims 35 to 68.

73. A computer-readable storage medium for storing a computer program that is executed to cause a computer to perform the method of any one of claims 1 to 34 or the method of any one of claims 35 to 68.

74. A computer program product comprising computer program instructions that are executed to cause a computer to perform the method of any one of claims 1 to 34 or the method of any one of claims 35 to 68.

75. A computer program that is executed to cause a computer to perform the method of any one of claims 1 to 34 or the method of any one of claims 35 to 68.
